(19) **Europäisches Patentamt / European Patent Office / Office européen des brevets**

(11) **EP 4 570 861 A1**

(12) **EUROPEAN PATENT APPLICATION**
published in accordance with Art. 153(4) EPC

(43) Date of publication:
**18.06.2025 Bulletin 2025/25**

(21) Application number: **23852473.0**

(22) Date of filing: **03.08.2023**

(51) International Patent Classification (IPC):
$C09B\ 67/02^{(2006.01)}$    $A23L\ 2/52^{(2006.01)}$
$A23L\ 2/58^{(2006.01)}$    $A23L\ 5/00^{(2016.01)}$
$A23L\ 5/41^{(2016.01)}$    $A23L\ 5/43^{(2016.01)}$
$A23L\ 5/44^{(2016.01)}$    $A23L\ 5/46^{(2016.01)}$
$A23L\ 29/275^{(2016.01)}$    $A61K\ 9/10^{(2006.01)}$
$A61K\ 9/14^{(2006.01)}$    $A61K\ 47/30^{(2006.01)}$
$A61K\ 47/36^{(2006.01)}$    $A61K\ 47/44^{(2017.01)}$
$C09B\ 61/00^{(2006.01)}$

(52) Cooperative Patent Classification (CPC):
**A23L 2/52; A23L 2/58; A23L 5/00; A23L 5/41;
A23L 5/43; A23L 5/44; A23L 5/46; A23L 29/275;
A61K 9/10; A61K 9/14; A61K 47/30; A61K 47/36;
A61K 47/44; C09B 61/00; C09B 67/0097**

(86) International application number:
**PCT/JP2023/028364**

(87) International publication number:
**WO 2024/034506 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.08.2022 JP 2022128017**

(71) Applicant: **Suntory Holdings Limited
Osaka-shi, Osaka 530-8203 (JP)**

(72) Inventors:
• **INOUE, Ippei
Soraku-gun, Kyoto 619-0284 (JP)**
• **AZUMA, Toshiaki
Soraku-gun, Kyoto 619-0284 (JP)**
• **TAGUCHI, Yoshinari
Niigata-shi, Niigata 950-2181 (JP)**
• **TANAKA, Masato
Niigata-shi, Niigata 950-2181 (JP)**

(74) Representative: **Vossius & Partner
Patentanwälte Rechtsanwälte mbB
Siebertstrasse 3
81675 München (DE)**

(54) **CORE-SHELL PARTICLE AND PRODUCTION METHOD THEREFOR, DYE COMPOSITION, ORAL COMPOSITION, LIQUID ORAL COMPOSITION AND PRODUCTION METHOD THEREFOR, AND METHOD FOR FORMING PATTERN IN LIQUID**

(57) The present invention aims to provide a colorant composition that contains core-shell particles encapsulating a colorant and that can be used for forming a pattern such as a line in a liquid such as a drink, as well as a liquid oral composition containing the colorant composition and a production method therefor, and a method for forming a pattern in a liquid. The present invention relates to a colorant composition containing a first liquid and core-shell particles, the core-shell particles each including a core and a shell that encapsulates the core, the core containing an oily component and a colorant, the shell containing a cationic polymer, the cationic polymer being edible, the core-shell particles being dispersed in the first liquid.

**EP 4 570 861 A1**

**(Cont. next page)**

FIG.27

**Description**

TECHNICAL FIELD

The present invention relates to a colorant composition containing core-shell particles. Specifically, the present invention relates to a colorant composition that contains core-shell particles containing a colorant in the core and that can be used for forming a pattern in a liquid such as a drink. The present invention also relates to a liquid oral composition and a production method therefor. The present invention further relates to a method for forming a pattern in a liquid.

BACKGROUND ART

3D printing is a technique of forming a 3D structure by successively depositing 2D layers of material based on 3D computer-aided design (CAD) data. This technique has been used to form 3D structures of various materials such as metallic material, polymeric material, food material, and cells.

A proposed example of techniques for 3D printing in a liquid phase is a technique of constructing a polymer structure while exchanging liquids in accordance with the target conditions using a platform that allows for exchange of liquids during printing (Patent Literature 1). Patent Literature 2 discloses a technique of introducing, into a first fluid, a second fluid that is immiscible with the first fluid to form a pattern in the first fluid by use of their immiscibility with each other.

Micro-sized particles are used in a variety of fields such as pharmaceuticals, cosmetics, and foods and drinks, and are constructed from a variety of materials by a variety of techniques. For example, to reduce discoloration of food colorants, a technique is proposed in which poly(lactide-co-glycolide) (PLGA) is mixed with a colorant to form colorant-containing nanoparticles (Patent Literature 3). Also proposed are particles composed of tea seed oil as a core substance and chitosan as a wall substance for the purpose of achieving attachment to hair (Patent Literature 4) as well as particles composed of a hydrophobic sunscreen as a core substance and a chitin derivative as a wall substance for the purpose of supporting the sunscreen (Patent Literature 5). Particles composed of hydrophobic essential oil coated with chitosan are also proposed (Non-Patent Literature 1).

CITATION LIST

- Patent Literature

    Patent Literature 1: US 2020/247053 A1
    Patent Literature 2: WO 2018/218264
    Patent Literature 3: JP 7042470 B
    Patent Literature 4: JP 2018-176047 A
    Patent Literature 5: JP 2000-504033 T

- Non-Patent Literature

Non-Patent Literature 1: G. C. Feyzioglu and F. Tornuk, LWT-Food Sci. Technol., 2016, 70, 104-110

SUMMARY OF INVENTION

- Technical Problem

Assuming that a 3D pattern is to be formed in a liquid such as a drink, a polymer structure formed by the technique of depositing a polymer material as in Patent Literature 1 needs to be in continuous contact with the bottom that serves as a platform, restricting the flexibility of a 3D pattern. As in the case of Patent Literature 2, i.e., using a combination of two immiscible fluids, portions of the same fluid fuse with each other while portions of different fluids cause phase separation. This restricts the flexibility in design of a 3D pattern to be drawn. The same issues as described above may arise not only in the case of forming a 3D pattern but also in the case of forming a 1D or 2D pattern in a liquid.

The present inventors have considered forming a pattern such as a character, a line, or a picture in a liquid with particles. However, assuming that a 3D pattern is to be formed in a drink, particles encapsulating a colorant in PLGA as disclosed in Patent Literature 3 suffer leakage of the colorant in the particles into the drink, making it difficult to achieve stable pattern formation. The particles of Patent Literature 4, Patent Literature 5, and Non-Patent Literature 1 are also not designed for pattern formation in a liquid. Patent Literature documents 1 to 5 and Non-Patent Literature 1 fail to examine any technique of forming a pattern in a liquid with particles.

The present invention aims to provide a colorant composition that contains core-shell particles encapsulating a colorant and that can be used for forming a pattern such as a line in a liquid such as a drink. The present invention also aims to provide a liquid oral composition containing the colorant composition and a production method therefor. The present invention also aims to provide a method for forming a pattern in a liquid.

- Solution to Problem

The present inventors have focused on the use of core-shell particles encapsulating a colorant for forming a pattern in a liquid such as a drink. Core-shell particles encapsulating a colorant have a lower diffusion speed than small molecules such as colorants and thus can remain at the place for a certain period of time in a liquid. To form a pattern of the colorant-encapsulating particles in a liquid, the colorant in the particles needs to be prevented from leakage into the liquid. The present inventors have found that using an oily component together with a colorant for the core can reduce leakage of the colorant from the particles into an aqueous solvent. They have also found that using a cationic polymer for the shell of the core-shell particles enables forming a stable pattern without aggregation of the particles in a liquid such as a drink. The present inventors have found that using a colorant composition containing the core-shell particles dispersed in a liquid can lead to forming a pattern, such as a character, a line, or a picture, of the particles in a liquid such as a drink.

In other words, the present invention relates to, although not limited to, a colorant composition, a liquid oral composition, a production method therefor, and a method for forming a pattern in a liquid, as follows.

[1] A colorant composition containing a first liquid and core-shell particles, the core-shell particles each including a core and a shell that encapsulates the core, the core containing an oily component and a colorant, the shell containing a cationic polymer, the cationic polymer being edible, the core-shell particles being dispersed in the first liquid.

[2] The colorant composition according to the clause [1], wherein the colorant composition is edible.

[3] The colorant composition according to the clause [1] or [2], wherein the first liquid is a liquid having a density of 0.9 to 1.1 g/cm$^3$.

[4] The colorant composition according to any one of the clauses [1] to [3], wherein the cationic polymer includes chitosan and/or chitin.

[5] The colorant composition according to any one of the clauses [1] to [4], wherein the cationic polymer is cross-linked with a cross-linker.

[6] The colorant composition according to any one of the clauses [1] to [5], wherein the first liquid is an aqueous solvent.

[7] The colorant composition according to any one of the clauses [1] to [6], wherein the colorant composition has a density of 0.9 to 1.1 g/cm$^3$.

[8] The colorant composition according to any one of the clauses [1] to [7], wherein the oily component is fat or oil of plant origin.

[9] The colorant composition according to any one of the clauses [1] to [8], wherein the core-shell particles have a mean volume diameter of 0.1 to 100 $\mu$m.

[10] The colorant composition according to any one of the clauses [1] to [9], wherein the core-shell particles further contain an emulsifier.

[11] The colorant composition according to the clause [10], wherein the emulsifier is a thickening polysaccharide or a nonionic surfactant having an HLB of 15 to 17.

[12] The colorant composition according to the clause [11], wherein the nonionic surfactant having an HLB of 15 to 17 includes polyoxyethylene sorbitan monooleate and/or a polyglycerol fatty acid ester.

[13] The colorant composition according to the clause [11], wherein the thickening polysaccharide is hydroxypropyl methylcellulose.

[14] The colorant composition according to any one of the clauses [1] to [13], wherein the colorant is at least one selected from the group consisting of capsicum oleoresin, gardenia color, monascus color, chlorophyll, $\beta$-carotene, astaxanthin, and azo color.

[15] The colorant composition according to any one of the clauses [1] to [14], wherein the colorant composition is for use in an oral composition.

[16] The colorant composition according to any one of the clauses [1] to [15], wherein the core-shell particles are contained in an amount of 0.05 to 50 wt%.

[17] The colorant composition according to any one of the clauses [1] to [16], wherein the colorant composition has a viscosity at 25°C of 0.8 to 100 mPa·s.

[18] The colorant composition according to any one of the clauses [1] to [17], wherein the colorant composition is for use in forming a pattern in a second liquid in a container.

[19] A liquid oral composition containing the colorant composition according to any one of the clauses [1] to [18] and an edible third liquid, the colorant composition being edible.

[20] The liquid oral composition according to the clause [19], wherein the core-shell particles form a pattern in the third liquid.

[21] The liquid oral composition according to the clause [19], wherein the third liquid forms a pattern in the colorant composition.

[22] The liquid oral composition according to any one of the clauses [19] to [21], wherein the core-shell particles are contained in an amount of 0.01 to 10 wt%.

[23] A method for producing a liquid oral composition, the method including the following step (I) or step (II):

(I) adding the colorant composition according to any one of the clauses [1] to [18] to an edible third liquid; or

(II) adding an edible third liquid to the colorant composition according to any one of the clauses [1] to [18],

the colorant composition being edible.

[24] The production method according to the clause [23], wherein the production method includes the step (I), and the step (I) includes injecting the colorant composition into the third liquid to form a pattern of the core-shell particles in the third liquid.

[25] The production method according to the clause [23], wherein the production method includes the step (II), and the step (II) includes injecting the third liquid into the colorant composition to form a pattern of the third liquid in the colorant composition.

[26] A method for forming a pattern in a liquid, the method including injecting the colorant composition according to any one of the clauses [1] to [18] into a second liquid in a container to form a pattern of the core-shell particles in the second liquid.

[27] The method according to the clause [26], wherein the colorant composition and the second liquid are edible.

[28] A method for forming a pattern in a colorant composition, the method including injecting a second liquid into the colorant composition according to any one of the clauses [1] to [18] to form a pattern of the second liquid in the colorant composition.

[29] The method according to the clause [28], wherein the colorant composition and the second liquid are edible.

- Advantageous Effects of Invention

The present invention can provide a colorant composition that contains core-shell particles encapsulating a colorant and that can be used for forming a pattern such as a line in a liquid such as a drink. The present invention can also provide a liquid oral composition containing the colorant composition and a production method therefor. The present invention can also provide a method for forming a pattern in a liquid.

BRIEF DESCRIPTION OF THE DRAWINGS

FIG. 1 is a graph of the density of particles vs. the theoretically estimated weight ratio (O/C) in the particles at the corresponding density, where O represents an oily component, which is oleic acid, and C represents chitosan, which serves as a cationic polymer.

FIG. 2A is a graph of the number-based particle size distribution and volume-based particle size distribution of colorant-encapsulating chitosan particles before cross-linking (solid line: number-based, dotted line: volume-based).

FIG. 2B is a graph of the number-based particle size distribution and volume-based particle size distribution of the colorant-encapsulating chitosan particles after cross-linking with sodium tripolyphosphate (TPP) (solid line: number-based, dotted line: volume-based).

FIG. 3 is a micrograph of a dispersion of colorant-encapsulating chitosan particles produced in Production Example 1.

FIG. 4 is a graph of the mean number diameters of colorant-encapsulating chitosan particles produced in Example 2.

FIG. 5 is a graph of the mean volume diameters of the colorant-encapsulating chitosan particles produced in Example 2.

FIG. 6 is a graph of the uniformity parameters (mean number diameter/mean volume diameter; N/V rates) of the colorant-encapsulating chitosan particles produced in Example 2.

FIG. 7 is a graph of the mean number diameters of colorant-encapsulating chitosan particles produced using hydroxypropyl methylcellulose (HPMC).

FIG. 8 is a graph of the mean volume diameters of the colorant-encapsulating chitosan particles produced using HPMC.

FIG. 9 is a graph of the uniformity parameters (N/V rates) of the colorant-encapsulating chitosan particles produced using HPMC.

FIG. 10 is a graph of the mean number diameters of colorant-encapsulating chitosan particles produced using various concentrations of a polyglycerol fatty acid ester or HPMC.

FIG. 11 is a graph of the mean volume diameters of the colorant-encapsulating chitosan particles produced using various concentrations of a polyglycerol fatty acid ester or HPMC.

FIG. 12 is a graph of the uniformity parameters (N/V rates) of the colorant-encapsulating chitosan particles produced using various concentrations of a polyglycerol fatty acid ester or HPMC.

FIG. 13A is a micrograph of a dispersion of colorant-encapsulating chitosan particles produced in Production Example 3. FIG. 13B is a graph of the number-based particle size distribution and volume-based particle size distribution of the colorant-encapsulating chitosan particles produced in Production Example 3 (solid line: number-based, dotted line: volume-based).

FIG. 14A is a micrograph of a dispersion of colorant-encapsulating chitosan particles purified by centrifugation. FIG. 14B is a graph of the number-based particle size distribution and volume-based particle size distribution of the colorant-encapsulating chitosan particles purified by centrifugation (solid line: number-based, dotted line: volume-based).

FIG. 15 is a photograph of a pattern of a dispersion of colorant-encapsulating chitosan particles formed in a 1.2 vol% aqueous glycerol solution.

FIG. 16 is a micrograph of a dispersion of colorant-encapsulating chitosan particles produced using a decaglycerol myristate as an emulsifier.

FIG. 17 is a graph of the 480 nm absorbance variations of dispersions of colorant-encapsulating chitosan particles produced with different amounts of a colorant added.

FIG. 18A, FIG. 18B, FIG. 18C, and FIG. 18D are micrographs of dispersions of colorant-encapsulating chitosan particles produced using a variety of colorants (FIG. 18A: Nichino Color G-AO-3, FIG. 18B: KC Red BO-5, FIG. 18C: KC Red KO-5, FIG. 18D: KC Red MO-52).

FIG. 19A, FIG. 19B, FIG. 19C, and FIG. 19D are graphs of the absorbance spectra of dispersions of colorant-encapsulating chitosan particles produced using a variety of colorants, flow-through filtrates obtained by ultrafiltration of the dispersions, and aqueous phase concentrates (FIG. 19A: Nichino Color G-AO-3, FIG. 19B: KC Red BO-5, FIG. 19C: KC Red KO-5, FIG. 19D: KC Red MO-52).

FIG. 20 is a micrograph of a dispersion of colorant-encapsulating chitosan particles produced using a blue colorant.

FIG. 21 is a micrograph of a dispersion of colorant-encapsulating chitosan particles produced using chitosan of crab origin.

FIG. 22A, FIG. 22B, FIG. 22C, FIG. 22D, and FIG. 22E are micrographs of dispersions of colorant-encapsulating chitosan particles produced at a variety of oily component/chitosan weight ratios (O/C) (FIG. 22A: O/C = 5.6, FIG. 22B: O/C = 2.2, FIG. 22C: O/C = 1.1, FIG. 22D: O/C = 0.6, FIG. 22E: O/C = 0.1).

FIG. 23 is a graph of the density evaluation results (collection ratios) of colorant-encapsulating chitosan particles produced at a variety of oily component/chitosan weight ratios (O/C).

FIG. 24 is a graph of the density evaluation results (collection ratios) of colorant-encapsulating chitosan particles produced at a variety of oily component/chitosan weight ratios (O/C).

FIG. 25A is a micrograph of a dispersion of colorant-encapsulating chitosan particles purified by centrifugation. FIG. 25B is a graph of the number-based particle size distribution and volume-based particle size distribution of the colorant-encapsulating chitosan particles purified by centrifugation (solid line: number-based, dotted line: volume-based).

FIG. 26A is a micrograph of a dispersion of colorant-encapsulating chitosan particles produced using linolenic acid.

FIG. 26B is a micrograph of a dispersion of colorant-encapsulating chitosan particles produced using palmitic acid.

Fig. 27 is a conceptual diagram of an exemplary system for producing a pattern-containing liquid in which a pattern is formed in a liquid.

Fig. 28 is a conceptual diagram of an exemplary system for producing a pattern-containing liquid in which a gantry system is used.

Fig. 29 is a conceptual diagram of an exemplary system for producing a pattern-containing liquid in which a robot arm is used.

FIG. 30 is a schematic perspective view of a device for forming a pattern in a liquid used in the EXAMPLES.

FIG. 31 is a photograph of a pattern drawn in a liquid using a dispersion of colorant-encapsulating chitosan particles as ink.

## DESCRIPTION OF EMBODIMENTS

<Colorant composition>

The colorant composition of the present invention is a colorant composition containing a first liquid and core-shell particles, the core-shell particles each including a core and a shell that encapsulates the core, the core containing an oily component and a colorant, the shell containing a cationic polymer, the cationic polymer being edible, the core-shell particles being dispersed in the first liquid.

The core-shell particles contained in the colorant composition of the present invention are also referred to as first core-shell particles. The colorant composition of the present invention contains a liquid (first liquid) and is usually in the form of liquid. The colorant composition in the liquid form can be discharged into a liquid using a dropper or nozzle, for example. The colorant composition can thus be suitably used for forming a pattern of the core-shell particles in a liquid. This liquid in which a pattern is to be formed is a (another) liquid (second liquid) different from the colorant composition.

The core-shell particles may include multiple, different particles. For example, the core-shell particles may include multiple types of particles in which any or all of the components of the particles, such as a colorant, oily component, and cationic polymer, are of different types. Also, the core-shell particles may include multiple types of particles containing different amounts of any of the components.

The colorant composition of the present invention preferably has a density of 0.9 to 1.1 g/cm³. The "density" means the weight per unit volume. In the present invention, the density refers to the density at 25°C. The colorant composition having a density within this range can be easily prevented from diffusing in a liquid such as a drink when added to the liquid. The density of the colorant composition is more preferably 0.92 to 1.08 g/cm³, still more preferably 0.95 to 1.05 g/cm³. The density of the colorant composition can be measured using a density meter (DMA 4500 M available from Anton Paar GmbH), for example.

The first liquid to be used may be a liquid that can disperse the core-shell particles. The first liquid is preferably a liquid having a density of 0.9 to 1.1 g/cm³. The density of the first liquid is more preferably 0.92 to 1.08 g/cm³, still more preferably 0.95 to 1.05 g/cm³. The density of a liquid can be measured using a density meter (DMA 4500 M, available from Anton Paar GmbH), for example.

In a preferred embodiment of the present invention, the density of the colorant composition and the density of the first liquid are each preferably 0.9 to 1.1 g/cm³, more preferably 0.92 to 1.08 g/cm³, still more preferably 0.95 to 1.05 g/cm³.

The first liquid to be used may include a single liquid or may be a liquid mixture of two or more liquids.

The first liquid is preferably an aqueous solvent. The aqueous solvent to be used may be water or an aqueous solution in which water serves as a solvent. The aqueous solvent to be used may be a beverage containing water as a solvent. The aqueous solvent is preferably water, an aqueous alcohol solution, or a beverage. The alcohol is any water-miscible alcohol. The aqueous alcohol solution is an aqueous solution of preferably a C2-C4 alcohol, and is preferably an aqueous ethanol solution or an aqueous glycerol solution, for example. Examples of the beverage include beverages that can be used as a third liquid to be described later. The beverage may be an alcoholic liquor or may be a soft drink. In an embodiment, the first liquid is preferably edible, and is preferably an edible aqueous solvent. The term "edible" means that a human can eat the substance of interest. Whether a human can digest it and whether a human can absorb it are not limited. In an embodiment, the first liquid is more preferably water or a beverage, still more preferably water. The first liquid may contain an additive such as an emulsifier, an acidity regulator, or an acidifier to be described later.

To make the colorant encapsulated in the core-shell particles visible from the outside, the first liquid is preferably a colored or colorless, transparent one, more preferably a colorless and transparent one.

The core-shell particles to be used in the present invention are core-shell particles (core-shell-type particles) each including a core and a shell that encapsulates the core. In the core-shell particles in the present invention, the core (also referred to as a core portion) contains an oily component and a colorant. The shell (also referred to as a shell layer) contains a cationic polymer. The core-shell particles in the present invention may also be regarded as microcapsules each including a core and a shell that encapsulates the core.

The core of the core-shell particles contains an oily component and a colorant.

Examples of the oily component include, but are not limited to, fats and oils, ester oil, ether oil, higher fatty acids, silicone oil, essential oil, and hydrocarbon oil. One oily component may be used alone or two or more oily components may be used in combination. The oily component can be selected in accordance with the intended use of the colorant composition. For example, in the case of using the colorant composition for an oral composition such as food or drink, using an edible oily component is preferred. The oral composition is a composition to be taken orally, and examples thereof include foods and drinks, oral pharmaceuticals, and oral quasi drugs. In the case of using the colorant composition for cosmetics, for example, an oily component that is commonly used for cosmetics can be suitably used.

Examples of fats and oils include fats and oils of plant origin (vegetable fats and oils) and fats and oils of animal origin (animal fats and oils).

Examples of vegetable fats and oils include safflower oil (carthamus oil), olive oil, sunflower oil, sesame oil, linseed oil, perilla oil, corn oil, coconut oil, grapeseed oil, rice oil, soybean oil, canola oil (rapeseed oil), palm oil, palm kernel oil, cottonseed oil, almond oil, peanut oil, cashew oil, hazelnut oil, cocoa butter, macadamia oil, and avocado oil.

Examples of animal fats and oils include tallow (beef fat), lard (pig fat), horse fat, bone tallow, butter fat (butter), and fish oil.

Examples of ester oil, include octyldodecyl myristate, isopropyl palmitate, butyl stearate, myristyl myristate, isopropyl myristate, di-2-ethylhexyl adipate, diisopropyl sebacate, neopentyl glycol dicaprylate, trioctanoin, and cetyl ethylhexanoate.

Examples of ether oil include dioctyl ether, cetyldimethylbutyl ether, ethylene glycol octyl ether, ethylene glycol dioctyl ether, and glycerol monooleoyl ether.

Examples of higher fatty acids include C6 or higher fatty acids, such as linoleic acid, linolenic acid, oleic acid, eicosenoic acid, isomyristic acid, capric acid, palmitic acid, and docosahexaenoic acid. The higher fatty acid is preferably a C8-C30 fatty acid, more preferably a C14-C24 fatty acid, still more preferably a C16-C22 fatty acid. In an embodiment, the higher fatty acid is preferably an unsaturated fatty acid.

Examples of silicone oil include dimethylpolysiloxane, cyclic dimethylpolysiloxane, methylphenylpolysiloxane, amino-modified silicone, epoxy-modified silicone, carboxy-modified silicone, alcohol-modified silicone, alkyl-modified silicone, polyether-modified silicone, and fluorine-modified silicone.

Examples of essential oil include orange oil and lavender oil.

Examples of hydrocarbon oil include liquid paraffin, squalane, squalene, and n-hexadecane.

The oily component is preferably a fat or oil or a higher fatty acid, more preferably a fat or oil or oleic acid, still more preferably a fat or oil of plant origin (vegetable fat or oil), particularly preferably a vegetable oil. In an embodiment, the oily component is preferably an edible oily component. In an embodiment, the edible oily component is preferably an edible vegetable fat or oil, more preferably at least one vegetable fat or oil selected from the group consisting of safflower oil (carthamus oil), sesame oil, soybean oil, sunflower oil, olive oil, palm oil, palm kernel oil, canola oil (rapeseed oil), rice oil, coconut oil, corn oil, cottonseed oil, almond oil, peanut oil, cashew oil, hazelnut oil, cocoa butter, macadamia oil, perilla oil, linseed oil, grapeseed oil, and avocado oil.

The oily component has a density of preferably 0.8 to 0.95 $g/cm^3$, more preferably 0.85 to 0.94 $g/cm^3$, still more preferably 0.88 to 0.93 $g/cm^3$. The density of the oily component can be measured using a density meter in the case where the oily component is in the form of liquid. For example, vegetable fats and oils commonly have a density of 0.85 to 0.94 $g/cm^3$. The edible vegetable fats and oils mentioned above commonly have a density of 0.88 to 0.93 $g/cm^3$).

Examples of the colorant include, but are not limited to, a red colorant, a yellow colorant, a blue colorant, a green colorant, and a black colorant. One of these may be used alone or two or more of these may be used in combination. In an embodiment where the colorant composition is used to form a pattern in a liquid, the core-shell particles preferably stably hold the colorant in the liquid. This is because molecules of the colorant contained in the core-shell particles have small molecular weights and the colorant, when released to the liquid, may rapidly spread to disturb the pattern in the liquid. In an embodiment where the colorant composition is used to form a pattern in an aqueous solvent such as water, a hydrophobic colorant is preferred. This is because a hydrophobic colorant does not easily disperse in an aqueous solvent, so that the colorant is less likely to leak into the solvent. The colorant to be used in the present invention may be hydrophilic. A hydrophilic colorant, when dispersed in an oily component, can also be contained in the core of the core-shell particles.

Examples of the colorant include natural colorants such as capsicum oleoresin, gardenia color, monascus color, chlorophyll, β-carotene, astaxanthin, squid ink color, caramel color, tomato color, paprika oleoresin, safflower color, and chlorella color; azo color; and pigments. Examples of the pigments include titanium dioxide, silica, and carbon fine particles.

In an embodiment, the colorant is preferably at least one selected from the group consisting of capsicum oleoresin, gardenia color, monascus color, chlorophyll, β-carotene, astaxanthin, and azo color. Examples of preferred azo color include Food Red No. 2, Food Red No. 3, Food Red No. 40, Food Red No. 102, Food Red No. 104, Food Red No. 105, Food Red No. 106, Food Yellow No. 4, Food Yellow No. 5, Food Green No. 3, Food Blue No. 1, and Food Blue No. 2. The colorant to be used is preferably an edible colorant.

The amount of the oily component contained in the core is preferably 10 to 99.99 wt% relative to the weight of the core. This range of the amount of the oily component contained in the core is preferred because the core can be prevented from leaking through the shell and the particles can have improved stability. The amount of the oily component contained in the core is preferably 10 to 99 wt%, more preferably 20 to 95 wt%. In the case of using two or more oily components in the present invention, the amount of the oily component refers to the sum of the amounts thereof.

The weight ratio of the colorant to the oily component (colorant/oily component) is preferably 0.001 or higher and is preferably 0.3 or lower. This range of the weight ratio of the colorant to the oily component (colorant/oily component) allows the particles to exhibit a stronger color. Thus, using a colorant composition containing the core-shell particles for forming a pattern in a liquid can lead to forming a clear pattern. The weight ratio of the colorant to the oily component (colorant/oily component) is more preferably 0.003 or higher, still more preferably 0.005 or higher, while more preferably 0.2 or lower, still more preferably 0.1 or lower. In an embodiment, the weight ratio of the colorant to the oily component (colorant/oily component) is preferably 0.001 to 0.3, more preferably 0.003 to 0.2, still more preferably 0.005 to 0.1. In the case of using two or more colorants, the amount of the colorant refers to the sum of the amounts thereof. In the core, the colorant is preferably dispersed in the oily component.

The shell of the core-shell particles contains a cationic polymer. One cationic polymer may be used alone or two or more cationic polymers may be used in combination.

In an embodiment, the cationic polymer is preferably one insoluble in an aqueous solvent. The cationic polymer is preferably edible. The cationic polymer is preferably, for example, chitosan, chitin, poly-L-lysine, poly-L-histidine, polyethylene imine, poly[2-(dimethylamino)ethyl methacrylate], or poly(amidoamine). In particular, chitosan, chitin, poly-L-lysine, or poly-L-histidine is preferred as an edible cationic polymer. The cationic polymer in the present invention more preferably includes chitosan and/or chitin, and is still more preferably chitosan. The shell of the core-shell particles in the present invention preferably contains chitosan and/or chitin, more preferably contains chitosan, as a cationic polymer. The cationic polymer may be of any origin, and may be of animal origin (e.g., shrimp, crab) or may be of plant origin. The core-shell particles containing an edible cationic polymer in the shell can be suitably used for forming a pattern in an oral liquid composition such as a drink.

Chitosan to be used may be, but is not limited to, one obtainable by deacetylating chitin obtained from a crustacean such as shrimp or crab. Chitosan of plant origin, such as chitosan derived from Aspergillus Niger, may also be used.

In terms of the solubility in a solvent, the degree of deacetylation of chitosan is preferably 60 to 100%, more preferably 70 to 90%. The degree of deacetylation of chitosan can be determined by NMR measurement or infrared absorption spectrometry, specifically by calculating the ratio of $-NH_2$ groups and $-NHCOCH_3$ groups, for example.

The cationic polymer has a weight average molecular weight of preferably 1000 to 5000000, more preferably 5000 to 2000000, for example. The weight average molecular weight of the cationic polymer can be determined by a combination of size exclusion chromatography and multi angle light scattering, for example.

The cationic polymer in the shell is preferably cross-linked with a cross-linker. Cross-linking the cationic polymer is preferred because the shell can more stably hold the core therein. The cross-linker may be any one capable of cross-linking the cationic polymer. One cross-linker may be used alone or two or more cross-linkers may be used in combination. The cross-linker to be used may be an anionic molecule, for example. The cationic polymer is preferably cross-linked with an anionic molecule. Examples of the anionic molecule include sodium tripolyphosphate, sodium alginate, gum arabic, carboxymethyl cellulose, poly(acrylic acid), heparin, peptides, DNA, RNA, and citric acid. Preferably used are edible anionic molecules, such as sodium tripolyphosphate, gum arabic, and carboxymethyl cellulose, for example.

The amount of the cationic polymer contained in the shell is preferably 1 to 100 wt%, more preferably 10 to 99 wt%, still more preferably 50 to 99 wt%. In the case where the cationic polymer is cross-linked with a cross-linker, the amount of the cross-linker contained in the shell is preferably 0.4 to 9 wt%, more preferably 1 to 7 wt%.

The amount of the cationic polymer contained in the core-shell particles is preferably 1 to 48 wt%, more preferably 3 to 31 wt%. In the case of using two or more cationic polymers, the amount of the cationic polymer refers to the sum of the amounts thereof.

The core-shell particles in the present invention preferably contain an emulsifier. One emulsifier may be used alone or two or more emulsifiers may be used in combination. The emulsifier is preferably a thickening polysaccharide or a nonionic surfactant having an HLB of 15 to 17. The HLB (hydrophilic lipophilic balance) in the present invention refers to the HLB calculated by the Griffin's method. The emulsifier to be used may be a commercially available product.

The thickening polysaccharide is preferably hydroxypropyl methylcellulose. The nonionic surfactant having an HLB of 15 to 17 is preferably polyoxyethylene sorbitan monooleate (Tween 80) (HLB 15) or a polyglycerol fatty acid ester. Examples of the polyglycerol fatty acid ester include decaglycerol laurate (HLB 16 to 17) and decaglycerol myristate (HLB 15 to 16).

In an embodiment, the emulsifier is preferably at least one selected from the group consisting of hydroxypropyl methylcellulose, polyoxyethylene sorbitan monooleate, decaglycerol laurate, and decaglycerol myristate.

The amount of the emulsifier contained in the core-shell particles is preferably 1 to 60 wt%, more preferably 2 to 47 wt%, still more preferably 2 to 45 wt%. In the case of using two or more emulsifiers, the amount of the emulsifier refers to the sum of the amounts thereof.

If necessary, at least one of the core or the shell of the core-shell particles may contain a component (referred to as a different component) other than the above components to the extent that the different component does not impair the effect of the present invention. Examples of the different component include a taste component, a nutrient, an aroma component, and a medicinal component.

From the viewpoints of safety and environmental load, the core-shell particles are preferably edible. The core-shell particles are preferably formed from an edible material, more preferably formed from a food material.

The core-shell particles in the present invention have a density of preferably 0.9 to 1.1 $g/cm^3$. The core-shell particles having a density of 0.9 to 1.1 $g/cm^3$ can be suitably used for forming a pattern in a liquid such as a drink. For example, in the case where the density of the first liquid is 0.9 to 1.1 $g/cm^3$, the core-shell particles having a density of 0.9 to 1.1 $g/cm^3$ can well disperse in this liquid. The density of the core-shell particles is more preferably 0.92 $g/cm^3$ or higher, still more preferably 0.95 $g/cm^3$ or higher, while more preferably 1.08 $g/cm^3$ or lower, still more preferably 1.05 $g/cm^3$ or lower. In an embodiment, the density of the core-shell particles is more preferably 0.92 to 1.08 $g/cm^3$, still more preferably 0.95 to 1.05 $g/cm^3$.

When the core-shell particles (or the colorant composition to be described later), after added dropwise to solutions (e.g., aqueous glycerol solution or aqueous ethanol solution) of various densities and centrifuged under predetermined conditions (25°C, 10000 × g, 5 min), do not float or sink but disperses in a solution, the "density of the core-shell particles" can be regarded as comparable to the density of the corresponding solution.

The presence of the core-shell particles having a density of 0.9 to 1.1 $g/cm^3$ in a liquid, for example, can be confirmed by the following method. First, the target particles are suspended in a solution having a density of 0.9 $g/cm^3$ (e.g., 54 vol% aqueous ethanol solution, density 0.900 $g/cm^3$) and centrifuged under predetermined conditions (25°C, 10000 × g, 5 min). The resulting precipitate is suspended in a solution having a density of 1.1 $g/cm^3$ (e.g., 35 vol% aqueous glycerol solution, density 1.100 $g/cm^3$) and centrifuged (25°C, 10000 × g, 5 min). In the case where the supernatant obtained by this centrifugation contains the core-shell particles, it means that the target particles contain the core-shell particles having a density of 0.9 to 1.1 $g/cm^3$. The core-shell particles can be observed under a microscope.

Specifically, the target particles are suspended in a 54 vol% aqueous ethanol solution and centrifuged at 25°C and 10000 × g for five minutes to collect the precipitate. In this process, particles having a density lower than that of the 54 vol% aqueous ethanol solution (density 0.900 $g/cm^3$) are separated into the supernatant fraction while particles having a higher density are separated into the precipitate fraction. The target core-shell particles are separated into the precipitate fraction. This precipitate is suspended in a 35 vol% aqueous glycerol solution and centrifuged at 25°C and 10000 × g for five minutes to collect the supernatant. In this process, particles having a density lower than that of the 35 vol% aqueous glycerol solution (density 1.100 $g/cm^3$) are separated into the supernatant fraction while particles having a higher density are separated into the precipitate fraction. The core-shell particles having a density of 0.9 to 1.1 $g/cm^3$ are separated into the supernatant fraction. In the case where this supernatant is observed under a microscope and the core-shell particles are contained, the particles correspond to the core-shell particles having a density of 0.9 to 1.1 $g/cm^3$.

Further, the proportion of the core-shell particles having a density of 0.9 to 1.1 $g/cm^3$ in the particles contained in the solution can be evaluated by measuring the absorbance before and after the above operations. Specifically, before the centrifugation in a 54 vol% aqueous ethanol solution, the absorbance (A1) at the maximum absorption wavelength ($\lambda$max) of the solution containing the core-shell particles is measured. Then, after the centrifugation in a 35 vol% aqueous glycerol solution, the absorbance (A2) at the $\lambda$max of the resulting supernatant is measured. The volume of the 35 vol% aqueous glycerol solution in which the precipitate is to be suspended is set to be equal to the volume of the 54 vol% aqueous ethanol solution in which the particles are suspended. The absorbance (A1) at the $\lambda$max of the solution before the centrifugation is taken as 100%, and the relative value (100 × A2/A1) (%) of the absorbance (A2) at the $\lambda$max of the supernatant after the centrifugation is determined. This relative value is defined as the proportion of the target core-shell particles contained in the solution. The $\lambda$max of the solution can be obtained by determining the absorption spectrum (e.g., absorption spectrum within a wavelength range of 300 to 800 nm) of the solution. The absorption spectra and the absorbances can be determined using a spectrophotometer.

For core-shell particles having a density different from the above, the presence of the core-shell particles having this density can be confirmed by the method as described above. For example, the presence of core-shell particles having a density of 0.92 to 1.08 $g/cm^3$ can be confirmed by the method as described above using a solution having a density of 0.92 $g/cm^3$ and a solution having a density of 1.08 $g/cm^3$. The presence of core-shell particles having a density of 0.95 to 1.05 $g/cm^3$ can be confirmed by the method as described above using a solution having a density of 0.95 $g/cm^3$ and a solution having a density of 1.05 $g/cm^3$. A solution having a density higher than 1 $g/cm^3$ is preferably an aqueous glycerol solution and a solution having a density lower than 1 $g/cm^3$ is preferably an aqueous ethanol solution.

In an embodiment, the core-shell particles in the present invention preferably satisfy the following conditions (1) and (2).

(1) After suspended in a solution having a density of 0.9 $g/cm^3$ (preferably, 54 vol% aqueous ethanol solution) and centrifuged at 25°C and 10000 × g for five minutes, the core-shell particles are contained in the precipitate (the core-shell particles sink).
(2) After suspended in a solution having a density of 1.1 $g/cm^3$ (preferably, 35 vol% aqueous glycerol solution) and centrifuged at 25°C and 10000 × g for five minutes, the core-shell particles are contained in the supernatant.

The core-shell particles can be suitably used for forming a pattern in a liquid. To maintain a pattern in a liquid without causing the core-shell particles to float or sink, the density of the colorant composition is preferably comparable to that of a liquid (target liquid) in which the pattern is to be formed. The target liquid is preferably a liquid contained in a container. Examples of the target liquid include liquid foods and drinks such as water and beverages, liquid oral pharmaceuticals and liquid oral quasi drugs (e.g., liquid medicines, drink supplements), cosmetics, liquid parenteral pharmaceuticals and liquid parenteral quasi drugs (e.g., eye drops, nasal sprays), and liquids such as water in water tanks.

For example, common whisky has a density of 0.95 $g/cm^3$, water has a density of 0.997 $g/cm^3$, and cow milk has a density of 1.05 $g/cm^3$. In an embodiment, the core-shell particles, the first liquid, and the colorant composition preferably have a density of 0.95 to 1.05 $g/cm^3$. The core-shell particles having a density within this range can be more suitably used for forming a pattern in a drink, for example.

The density of the core-shell particles can be adjusted by adjusting the ratio of the components of the particles. In the present invention, adjusting the weight ratio of the cationic polymer and the oily component can lead to adjusting the density of the core-shell particles.

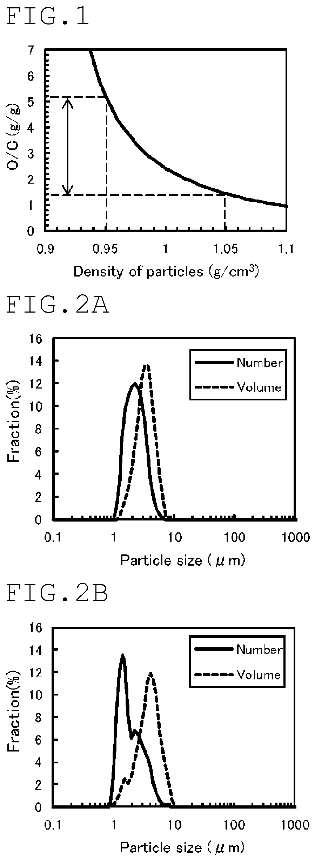

For the case of using chitosan as a cationic polymer, the following describes as an example the relationship between the density of the core-shell particles and the weight ratio of chitosan and the oily component in the particles. FIG. 1 is a graph of the density of particles vs. the theoretically estimated weight ratio (O/C) in the particles at the corresponding density, where O represents an oily component, which is oleic acid, and C represents chitosan, which serves as a cationic polymer.

In an exemplary case of particles consisting of chitosan, the density of which is 1.4 $g/cm^3$, and oleic acid, the density of which is 0.895 $g/cm^3$, particles having a density of 0.95 $g/cm^3$ are to contain 5.2 g of oleic acid per gram of chitosan. Similarly, in the case of providing particles having a density of 1.05 $g/cm^3$, the particles are to contain 1.4 g of oleic acid per gram of chitosan (FIG. 1). A smaller amount of oleic acid relative to chitosan causes the particles to be heavier and to more easily sink. This assumption shows that, in order to allow the particles consisting of chitosan and oleic acid to have a density of 0.95 to 1.05 $g/cm^3$, the amount of oleic acid to be added to and reacted in the reaction field for production of particles is equal to or more than that of chitosan.

With reference to an example, the following describes the density of the core-shell particles and the weight ratio of the oily component and the cationic polymer contained in the particles. In the following example, chitosan is used as a cationic polymer, no emulsifier is used, and core-shell particles containing a slight amount of a colorant are constructed.

For example, in the case of using docosahexaenoic acid (density 0.94 $g/cm^3$), which is a heavy fatty acid, as an oily component, 1 $cm^3$ of core-shell particles having a density of 0.95 $g/cm^3$ contains 0.92 g of docosahexaenoic acid and 0.03 g of chitosan. The weight ratio of the oily component to the cationic polymer (oily component/cationic polymer) in the core-shell particles is 30.2 (0.92/0.03). In this case, the total weight proportion of the oily component and the colorant in the core-shell particles (sum of the amounts of the oily component and the colorant contained in the core-shell particles) is 97 wt%.

In the case of using linolenic acid (density 0.92 $g/cm^3$), which is another example of heavy fatty acids, as an oily component, 1 $cm^3$ of core-shell particles having a density of 0.95 $g/cm^3$ contains 0.86 g of linolenic acid and 0.09 g of chitosan. The weight ratio of the oily component to the cationic polymer (oily component/cationic polymer) in the core-shell particles is 9.9 (0.86/0.09). In this case, the total weight proportion of the oily component and the colorant in the core-shell particles is 91 wt%.

In the case of using palmitic acid (density 0.853 $g/cm^3$), which is a light fatty acid, as an oily component, 1 $cm^3$ of core-shell particles having a density of 1.05 $g/cm^3$ contains 0.55 g of palmitic acid and 0.50 g of chitosan. The weight ratio of the oily component to the cationic polymer (oily component/cationic polymer) in the core-shell particles is 1.1 (0.55/0.50). In this case, the total weight proportion of the oily component and the colorant in the core-shell particles is 52 wt%.

Consequently, the weight ratio of the oily component to the cationic polymer (oily component/cationic polymer) in the core-shell particles is preferably 1.1 or higher and 30.2 or lower. To cause the core-shell particles to have a density within the above preferred range, the weight ratio of the oily component to the cationic polymer (oily component/cationic polymer) preferably falls within this range. In an embodiment where an oily component having a density of 0.85 to 0.94 $g/cm^3$ is used and the weight ratio of this oily component to a cationic polymer (oily component/cationic polymer) in the core-shell particles is 1.1 to 30.2, the density of the particles is commonly 0.95 to 1.05 $g/cm^3$.

In the core-shell particles, the weight ratio of the oily component to the cationic polymer (oily component/cationic polymer) is more preferably 1.4 or higher, still more preferably 1.7 or higher, while more preferably 20.0 or lower, still more preferably 10.0 or lower. In an embodiment, the weight ratio of the oily component to the cationic polymer (oily component/cationic polymer) is more preferably 1.4 to 20.0, still more preferably 1.7 to 10.0.

The amounts of the components such as the cationic polymer, the oily component, and the colorant contained in the core-shell particles can be obtained by extracting the respective components from the particles by known methods and then determining the amounts by known methods.

Optionally further adding an emulsifier can also change the total weight proportion of the oily component and the colorant in the core-shell particles. Emulsifiers of various densities are known; for example, polysorbate 80 has a density of 1.08 $g/cm^3$ and polyglycerol oleate has a density of 0.97 $g/cm^3$. An emulsifier having a density that suits the density of the target particles may be used, or emulsifiers may be mixed to prepare an emulsifier having a target density before use.

The following describes as an example core-shell particles having a density of 1.05 $g/cm^3$ constructed by adding an emulsifier adjusted to have a density of 1.05 $g/cm^3$ in an amount equal to the weight of palmitic acid. In the core-shell particles, the total weight proportion of the oily component and the colorant in the core-shell particles is 34 wt%. Consequently, in an embodiment, the total weight proportion of the oily component and the colorant in the core-shell particles (sum of the amounts of the oily component and the colorant in the core-shell particles) is preferably 34 wt% or more and 97 wt% or less.

In an embodiment, the total weight proportion of the oily component and the colorant in the core-shell particles is preferably 34 to 97 wt%. In the case where the total weight proportion of the oily component and the colorant in the core-shell particles falls within this range, a pattern of the particles can be stably formed in a liquid having a density of 0.9 to 1.1 g/cm$^3$. The total weight proportion of the oily component and the colorant in the core-shell particles is more preferably 35 wt% or more, still more preferably 40 wt% or more, particularly preferably 41 wt% or more, while more preferably 95 wt% or less, still more preferably 90 wt% or less. In an embodiment, the total weight proportion of the oily component and the colorant in the core-shell particles is more preferably 35 to 97 wt%, still more preferably 40 to 95 wt%, particularly preferably 41 to 90 wt%.

The shell of the core-shell particles may have any thickness; the average thickness thereof is preferably 10 to 500 nm, more preferably 50 to 300 nm. In the present invention, the shell is commonly transparent or semitransparent.

The core-shell particles have a mean volume diameter of preferably 0.1 $\mu$m or greater and 100 $\mu$m or smaller. As described later, the core-shell particles having a mean volume diameter within this range exhibit limited diffusion due to its size when injected into a liquid, and can remain at or around the injection site for several tens of minutes to several tens of hours depending on the size. Thereby, a pattern-containing liquid can be produced in which a pattern of the core-shell particles is placed at any position in a liquid. The core-shell particles having a mean volume diameter within the above range can be also more stably dispersed and held in the first liquid. The mean volume diameter of the core-shell particles is more preferably 0.2 $\mu$m or greater, still more preferably 0.3 $\mu$m or greater, particularly preferably 0.5 $\mu$m or greater, while more preferably 50 $\mu$m or smaller, still more preferably 10 $\mu$m or smaller. In an embodiment, the mean volume diameter of the core-shell particles is preferably 0.1 to 100 $\mu$m, more preferably 0.2 to 100 $\mu$m, still more preferably 0.3 to 50 $\mu$m, particularly preferably 0.5 to 50 $\mu$m, most preferably 0.5 to 10 $\mu$m.

The mean volume diameter (MV) is an average diameter weighed by volume, and is determined by the following formulas, where Vi represents the volume per particle, provided that the group of particles includes n1 particles having a particle size d1, n2 particles having a particle size d2, ... and nk particles having a particle size dk in ascending order.

$$MV = (V1 \times d1 + V2 \times d2 + ...\ \ Vk \times dk)/(V1 + V2 + ...\ \ Vk)$$

$$MV = \Sigma(Vi \times di)/\Sigma(Vi)$$

The core-shell particles have a ratio of the mean number diameter to the mean volume diameter (mean number diameter/mean volume diameter) of preferably 0.3 or higher, more preferably 0.5 or higher. This ratio is preferably 0.3 to 1, more preferably 0.5 to 1. The closer the ratio is to 1, the narrower the particle size distribution of the core-shell particles is. The mean number diameter and the mean volume diameter are determined using a laser diffraction particle size distribution analyzer.

In the present invention, the core-shell particles are preferably not chemically bonded to each other with a cross-linker. This is because a pattern of the core-shell particles is less likely to form a mass when this pattern of the particles is formed in a liquid. In the case of a drink, for example, preventing the core-shell particles from bonding to each other into a mass can make the drink containing the particles easily drinkable.

In the colorant composition, the ratio of the density (g/cm$^3$) of the core-shell particles (first core-shell particles) to the density (g/cm$^3$) of the first liquid (density of core-shell particles/density of first liquid) is preferably 0.9 or higher and 1.1 or lower. With a density ratio (density of core-shell particles/density of first liquid) of 0.9 to 1.1, the core-shell particles can be more stably dispersed and held in the first liquid. The density ratio (density of core-shell particles/density of first liquid) is more preferably 0.92 or higher, still more preferably 0.95 or higher, while more preferably 1.08 or lower, still more preferably 1.05 or lower. In an embodiment, the density ratio (density of core-shell particles/density of first liquid) is more preferably 0.92 to 1.08, still more preferably 0.95 to 1.05.

The ratio of the density of the core-shell particles (first core-shell particles) to the density of the colorant composition (density of core-shell particles/density of colorant composition) is preferably 0.9 or higher and 1.1 or lower. In the case where the ratio of the density of the core-shell particles to the density of the colorant composition falls within this range, the colorant composition can be stored while precipitation of the core-shell particles is more reduced, resulting in good formation of a pattern of the core-shell particles (first core-shell particles) in the second liquid. The density ratio (density of core-shell particles/density of colorant composition) is more preferably 0.92 or higher, still more preferably 0.95 or higher, while more preferably 1.08 or lower, still more preferably 1.05 or lower. In an embodiment, the density ratio (density of core-shell particles/density of colorant composition) is more preferably 0.92 to 1.08, still more preferably 0.95 to 1.05.

In the colorant composition of the present invention, the core-shell particles are contained in this composition in an amount of preferably 0.05 to 50 wt%. In the case where the amount of the core-shell particles contained falls within this range, forming a pattern of the core-shell particles in, for example, a second liquid using the colorant composition can provide a clearly visible pattern. The amount of the core-shell particles contained in the colorant composition is more preferably 0.5 to 30 wt%. The amount (wt%) of the core-shell particles contained in the colorant composition can be determined by collecting the particles by centrifugation or filtration and then measuring the dry weight of the particles.

The colorant composition has a viscosity at 25°C of preferably 0.8 to 100 mPa·s. The colorant composition having a viscosity within this range can be easily prevented from diffusing in a second liquid when added to the liquid. Thus, when the colorant composition is added to the second liquid to form a pattern of the core-shell particles, the shape of this pattern of the core-shell particles can be maintained in the liquid for a longer period of time. The colorant composition having a viscosity as described above is easy to inject or discharge into a liquid. From this viewpoint, the colorant composition has a viscosity at 25°C of preferably 1 to 100 mPa·s, more preferably 1 to 50 mPa·s. The viscosity can be measured using a vibration viscometer.

The colorant composition is preferably edible. The core-shell particles (first core-shell particles) and the first liquid are preferably edible. In an embodiment, the colorant composition is preferably a colorant composition for an oral composition.

The colorant composition of the present invention can be produced by any method, and may be produced by dispersing the core-shell particles in the first liquid, for example. Alternatively, for example, the colorant composition of the present invention may be produced by use of the method for producing core-shell particles to be described later.

In the colorant composition of the present invention, the core-shell particles are dispersed in the first liquid. The colorant composition of the present invention is a dispersion of the core-shell particles. The core-shell particles encapsulate a colorant and therefore commonly have a color. Thus, using the colorant composition containing the particles can provide a visually observable pattern in a second liquid, for example. The second liquid is a (another) liquid different from the colorant composition.

The colorant composition of the present invention is to function as a pattern-forming ink. The colorant composition of the present invention can be used as a pattern-forming material. The pattern may be any of a 1D pattern (line), a 2D pattern (plane), and a 3D pattern (solid). The type of the pattern is not limited. Examples thereof include a symbol such as a character, a line, and a picture. Using the colorant composition in which the core-shell particles are dispersed in the first liquid enables a spatial color designing owing to a pattern of the particles in the second liquid, for example. Introducing components such as a taste substance and an aroma component into the first core-shell particles and forming a pattern of the particles in the second liquid enables designing of taste and aroma in the liquid. Controlling the aggregation of the first core-shell particles enables formation of a mouthfeel pattern in the second liquid.

The colorant composition can be suitably used for forming a pattern in the second liquid. In an embodiment, the colorant composition can suitably be used for forming a pattern in the second liquid in a container (second liquid contained in a container). The second liquid in which a pattern is to be formed using the colorant composition may be a liquid of the same type (composition) as the first liquid or may be a liquid of a different type (composition). The second liquid is not limited. The second liquid is liquid (in the form of liquid) at a temperature where a pattern is formed, and is preferably in the form of liquid at 4°C to 70°C, for example.

Examples of the second liquid in which a pattern is to be formed include edible liquids such as water and liquid oral compositions, cosmetics, and liquids in water tanks. Examples of the liquid oral compositions include liquid foods and drinks, liquid oral pharmaceuticals, and liquid oral quasi drugs. The second liquid is preferably an edible liquid (third liquid), and is preferably a drink. In an embodiment, the colorant composition of the present invention can be used as a colorant composition preferably for a liquid oral composition, more preferably for a liquid food or drink, still more preferably for a drink. Using the colorant composition of the present invention enables forming a pattern of the first core-shell particles in the second liquid. The colorant composition of the present invention can suitably be used as a colorant composition for forming a pattern of color, for example, in a drink.

<Liquid oral composition and production method therefor>

A liquid oral composition containing the aforementioned colorant composition of the present invention is also encompassed by the present invention. The liquid oral composition of the present invention contains the colorant composition of the present invention and an edible third liquid, and the colorant composition is edible.

In the colorant composition, the core-shell particles and the first liquid used are edible ones that can be used for oral compositions, preferably ones that can be used for foods and drinks. The first liquid is preferably an aqueous solvent. The first liquid is preferably water, an aqueous ethanol solution, an aqueous glycerol solution, an aqueous protein solution, or the like. The first liquid may contain an additive such as an acidity regulator or an acidifier. The first liquid used may also preferably be a drink to be described later.

In an embodiment of the liquid oral composition of the present invention, a pattern of the core-shell particles (first core-shell particles) is preferably formed in the third liquid. The pattern may be any of a 1D pattern (line), a 2D pattern (plane), and a 3D pattern (solid). The type of the pattern is not limited. Examples thereof include patterns of a symbol such as a character, a line, and a picture; and patterns of taste, aroma, and mouthfeel.

In the liquid oral composition in which a pattern of the first core-shell particles is formed in the third liquid, the colorant composition may include one colorant composition or may include two or more colorant compositions. For example, two or more colorant compositions may be used between which at least one of the type of the core-shell particles or the type of the first liquid is different.

The third liquid to be used for the liquid oral composition is an edible liquid. Examples of the third liquid include drinks in general, liquid or gel foods, and liquid formulations. Specific examples of the edible third liquid include water and beverages; jelly drinks; frozen drinks; frozen cocktails; soups such as miso soup and tonjiru; foods such as soups (e.g., consomme soup, potage, cream soup, Chinese soup), curry, stew, and gel foods; soups of noodles such as udon, soba, and ramen; liquid seasonings such as dressings, sauces, Japanese sauces (e.g., yakiniku source, yakitori source), noodle soup bases, and soy sauce; and liquid formulations such as liquid medicines and drink supplements. The third liquid to be used may also be any raw material liquid for foods and drinks such as unset jelly liquid, ice cream base, and soy milk mixed with bittern (unset tofu). The liquid oral composition in which a pattern is formed may be set into a solid form. Solidifying the liquid oral composition is preferably achieved by freezing, for example. The frozen composition may be defrosted. Examples of solid compositions prepared by solidifying the liquid oral composition include frozen drinks, frozen desserts such as ice cream and sherbet, and jelly.

Examples of the drinks include soft drinks and alcoholic liquors. Examples of the soft drinks include tea beverages, coffee beverages, cocoa beverages, non-alcoholic beer-taste beverages, carbonated beverages, functional beverages, fruit and vegetable beverages, dairy beverages, plant-based milk, and flavored water.

Examples of the tea beverages include black tea beverages and unsweetened tea beverages. Examples of the unsweetened tea beverages include green tea beverages, oolong tea beverages, barley tea beverages, brown rice tea beverages, Job's tears tea beverages, and unsweetened black tea beverages. Examples of the coffee beverages include bottled coffee and ready-to-drink coffee.

The term "non-alcoholic beer-taste beverages" means carbonated beverages having beer-like taste, which contains substantially no alcohol. The non-alcoholic beer-taste beverages do not exclude beverages containing a trace amount of alcohol that is undetectable.

Examples of the carbonated beverages include cola-flavored beverages, transparent carbonated beverages, ginger ale, carbonated fruit beverages, carbonated dairy beverages, and sugar-free carbonated beverages. Examples of the functional beverages include sports drinks, energy drinks, and health support drinks.

Examples of the fruit and vegetable beverages include 100% fruit beverages, fruit-containing beverages, low fruit juice soft drinks, fruit beverages with pulp bits, fruit flesh beverages, and smoothies. Examples of the dairy beverages include cow milk, yogurt drinks, lactic fermented beverages, dairy soft drinks, and milkshakes. Examples of the plant-based milk beverages include soy milk beverages such as soy milk and soybean beverage, oat milk, and almond milk. Examples of the alcoholic liquors include beer, beer-type beverages, whiskey, shochu, Japanese sake, chuhai, liqueur, cocktails, spirits, wine, and brandy.

In an embodiment, the third liquid to be used is preferably water or a beverage. To make a pattern of the first core-shell particles visible from the outside, the third liquid preferably has a transparency that allows the pattern to be visible through this liquid. The third liquid may be either a colored or colorless, transparent liquid. The first liquid and the third liquid may be liquids of different types or may be liquids of the same type. To maintain a pattern of the first core-shell particles in a liquid for a long term, the first liquid contained in the colorant composition is preferably one compatible with the third liquid to form a pattern, and may be the same liquid as the third liquid or a liquid having a density similar to that of the third liquid. The third liquid may be a single type of liquid or may include multiple types of liquids which are mixed with or separated from each other.

The amount of the core-shell particles (first core-shell particles) contained in the liquid oral composition may be, but is not limited to, 0.01 to 10 wt%, and is preferably 0.1 to 5 wt%.

The ratio of the density of the core-shell particles (first core-shell particles) to the density of the liquid oral composition (density of core-shell particles/density of liquid oral composition) is preferably 0.9 or higher and 1.1 or lower. In the case where the ratio of the density of the core-shell particles to the density of the liquid oral composition falls within this range and the colorant composition is used to form a pattern of the first core-shell particles in the third liquid, this pattern can be effectively prevented from floating on or sinking in the third liquid. The density of the liquid oral composition can be measured using a density meter (e.g., DMA 4500 M, available from Anton Paar GmbH).

The density of the third liquid is preferably 0.9 to 1.1 g/cm$^3$, more preferably 0.92 to 1.08 g/cm$^3$, still more preferably 0.95 to 1.05 g/cm$^3$.

The ratio of the density (g/cm$^3$) of the third liquid to the density (g/cm$^3$) of the colorant composition (density of third liquid/density of colorant composition) is preferably 0.9 or higher and 1.1 or lower. In the case where the ratio of the density of the third liquid to the density of the colorant composition falls within this range and the colorant composition is used to form a pattern of the core-shell particles in the third liquid, this pattern can be effectively prevented from floating on or sinking in the third liquid.

The first liquid and the third liquid each preferably have a viscosity of 0.8 to 100 mPa·s at 25°C. In the case where they each have a viscosity of 0.8 to 100 mPa·s at 25°C, diffusion of the first liquid in the third liquid can be easily reduced. This allows a pattern of the first core-shell particles to maintain its shape in the third liquid for a longer term. These viscosities described above enable easy injection or discharge of the colorant composition into the third liquid. From this viewpoint, the viscosity at 25°C of each of the first liquid and the third liquid is more preferably 50 mPa·s or lower. In an embodiment, the viscosity of the first liquid and the viscosity of the third liquid are more preferably 1 to 100 mPa·s, more preferably 1 to 50 mPa·s, at 25°C. The viscosity of the first liquid may be higher than the viscosity of the third liquid or vice versa, or they may be substantially equal to each other. The temperature difference between the first liquid and the third liquid is preferably 0°C to 10°C, more preferably 0°C to 5°C. The temperature of the first liquid may be higher than that of the third liquid or vice versa, but still more preferably they are substantially equal to each other.

The third liquid may contain the core-shell particles as long as the effect of the present invention is not impaired, and may not contain the core-shell particles. The core-shell particles contained in the third liquid are referred to as the third core-shell particles. The third core-shell particles and preferred embodiments thereof are the same as the first core-shell particles and preferred embodiments thereof. The third core-shell particles may include multiple, different particles. In the case where the third liquid contains core-shell particles, the third core-shell particles are preferably dispersed in the third liquid. The third core-shell particles may be the same as or different from the first core-shell particles in the colorant composition. To make a pattern of the first core-shell particles easily visible, the third core-shell particles preferably contain a colorant having a color different from that of the first core-shell particles. The amount of the third core-shell particles, when contained in the third liquid, is preferably 0.5 to 30 wt%.

The ratio of the density (g/cm$^3$) of the third core-shell particles to the density (g/cm$^3$) of the third liquid (density of third core-shell particles/density of third liquid) is preferably 0.9 or higher and 1.1 or lower, more preferably 0.92 to 1.08, still more preferably 0.95 to 1.05.

In another embodiment, a pattern of the third liquid may be formed in the colorant composition in the liquid oral composition of the present invention. The pattern may be any of a 1D pattern (line), a 2D pattern (plane), and a 3D pattern (solid). The type of the pattern is not limited. Examples thereof include patterns of a symbol such as a character, a line, and a picture; and patterns of taste, aroma, and mouthfeel. In the liquid oral composition in which a pattern of the third liquid is formed in the colorant composition, the third liquid may include one liquid or may include two or more liquids.

The liquid oral composition of the present invention can be produced using the colorant composition and the third liquid. The liquid oral composition can be produced by performing the following step (I) or (II), for example. A method for producing a liquid oral composition including the following step (I) or (II) is also encompassed by the present invention. In the production method of the present invention, the colorant composition to be used is an edible colorant composition.

(I) Adding the colorant composition to an edible third liquid
(II) Adding an edible third liquid to the colorant composition

The colorant composition and preferred embodiments thereof are the same as those described above.

In an embodiment, preferably, the first core-shell particles form a pattern in the third liquid. In an embodiment, the method for producing a liquid oral composition preferably includes the step (I). In the step (I), preferably, the colorant composition is injected into the third liquid to form a pattern of the core-shell particles (first core-shell particles) in the third liquid. This pattern of the core-shell particles in the third liquid may be formed by any method. For example, in a method for forming a pattern in a liquid to be described later, an edible third liquid is used as a liquid (second liquid) into which the colorant composition is to be injected and the colorant composition is injected into this third liquid, whereby a pattern of the core-shell particles can be formed in the third liquid. In an embodiment, as will be described later, a method may be used in which the colorant composition is discharged into the third liquid using a position-controllable nozzle, thereby forming a pattern of the core-shell particles.

In another embodiment, the third liquid may be used to form a pattern in the colorant composition. In an embodiment, the method for producing a liquid oral composition preferably includes the step (II). In the step (II), preferably, the third liquid is injected into the colorant composition to form a pattern of the third liquid in the colorant composition. This pattern of the third liquid in the colorant composition may be formed by any method. For example, in a second embodiment of the method for forming a pattern in the colorant composition to be described later, the third liquid is used as a liquid (second liquid) to be injected into the colorant composition and this liquid is injected into the colorant composition, whereby a pattern of the third liquid can be formed in the colorant composition.

<Method for forming pattern in liquid>

The aforementioned colorant composition of the present invention is injected into a liquid (second liquid) in a container different from the colorant composition, whereby a pattern of the core-shell particles can be formed in the liquid. The present invention also encompasses such a method for forming a pattern in a liquid, the method including injecting the colorant composition into the second liquid in a container to form a pattern of the core-shell particles in the liquid (second liquid). This pattern-forming method is referred to as a first embodiment of the pattern-forming method.

In another embodiment, a liquid (second liquid), which is different from the colorant composition, is injected into the colorant composition, whereby a pattern of the second liquid can be formed in the colorant composition. A method for forming a pattern in a colorant composition, the method including injecting the second liquid into the colorant composition to form a pattern of the liquid (second liquid) in the colorant composition is also encompassed by the present invention. This pattern-forming method is referred to as a second embodiment of the pattern-forming method.

The first embodiment of the pattern-forming method is described below.

The colorant composition and preferred embodiments thereof are as described above.

The second liquid in which a pattern is to be formed may be any liquid in general, and is preferably a liquid containing an aqueous solvent, more preferably a liquid substance that is ingestible through drinking or is applicable to a skin. Examples of the aqueous solvent include the same as those described above. The second liquid to be used may be the above edible third liquid. Examples of the second liquid include perfumes, skin toners, and water in water tanks. In an embodiment, the colorant composition and the second liquid are preferably edible. In an embodiment, the second liquid is preferably a liquid mentioned as the third liquid, more preferably water or a beverage, still more preferably a beverage.

The colorant composition is used as a pattern-forming material for forming a pattern in a liquid. The colorant composition (pattern-forming material) may be injected into the second liquid in a container by any method. For example, a dropper, a nozzle, a syringe, a tube, or a hose is used to discharge the colorant composition into the second liquid, whereby a pattern of the core-shell particles (first core-shell particles) can be formed in the liquid. For example, a method may also be used in which the colorant composition is discharged into the second liquid using a position-controllable nozzle, thereby forming a pattern of the first core-shell particles in the liquid. The colorant composition of the pattern-forming material to be used is preferably a colorant composition in which the core-shell particles are dispersed in an aqueous solvent.

To maintain the core-shell particles (first core-shell particles) in a liquid in which a pattern is to be formed (second liquid) for a certain period of time, a preferred size range of the core-shell particles is determined depending on its diffusion coefficient. Particles added dropwise to a liquid diffuse by the Brownian motion. A typical moving distance x during a certain period of time t in this diffusion can be calculated by the following Formula 1 using the diffusion coefficient D of the particles.

$$x = \sqrt{(2Dt)} \quad \text{(Formula 1)}$$

This diffusion coefficient D can be calculated from the Stokes-Einstein relation (following formula 2):

$$D = (k_B T)/(3\pi\eta d) \quad \text{(Formula 2)}$$

wherein d represents the particle diameter, $k_B$ represents the Boltzmann's constant, T represents the absolute temperature, and $\eta$ represents the viscosity of liquid that forms the system.

When 1-$\mu$m-diameter particles are added dropwise to a liquid having a viscosity equivalent to that of water at 20°C, the diffusion coefficient D is $4 \times 10^{-13}$ m$^2$/s and the individual particles typically move 50 $\mu$m in one hour and 260 $\mu$m in 24 hours.

In other words, assuming that a colorant composition containing core-shell particles is used to draw a pattern with a line width of 1 mm in a liquid and that the core-shell particles constituting the line diffuse three-dimensionally, the diameter of the core-shell particles at which the line thickness increases by 30% (0.3 mm) or more in one hour is 0.1 $\mu$m or smaller. For example, in the case where a colorant composition (pattern-forming material) containing 0.1-$\mu$m-diameter core-shell particles is used to draw two lines each having a line width of 1 mm at an interval of 1 mm and where each line thickens 1.3 times, the distance between the two adjacent lines is still 0.3 mm and the two lines can therefore be distinguished from each other. In other words, using core-shell particles having a diameter of 0.1 $\mu$m or greater commonly enables drawing of a pattern that is recognizable one hour after the drawing.

Accordingly, the mean volume diameter of the core-shell particles, when used for forming a pattern in a liquid, may be 0.1 $\mu$m or greater, and is preferably 0.2 $\mu$m or greater and 100 $\mu$m or smaller. With a mean volume diameter of 0.2 $\mu$m or greater, a pattern drawn with a line width of 1 mm in the liquid can be sufficiently maintained even after the pattern is left for one hour. With a mean volume diameter of 100 $\mu$m or smaller, the core-shell particles can be less likely to give grainy texture when put into a mouth, for example. From this viewpoint, the mean volume diameter is more preferably 100 $\mu$m or smaller. The mean volume diameter of the core-shell particles is more preferably 0.3 $\mu$m or greater, still more preferably 0.5 $\mu$m or greater, while still more preferably 50 $\mu$m or smaller. In an embodiment, the mean volume diameter of the core-shell particles, when used for forming a pattern in a liquid, is preferably 0.1 to 100 $\mu$m, more preferably 0.2 to 100 $\mu$m, still more preferably 0.3 to 50 $\mu$m, particularly preferably 0.5 to 50 $\mu$m.

The density of the second liquid is preferably 0.9 to 1.1 g/cm$^3$, more preferably 0.92 to 1.08 g/cm$^3$, still more preferably 0.95 to 1.05 g/cm$^3$.

The ratio of the density of the core-shell particles (first core-shell particles) to the density of the second liquid (density of core-shell particles/density of second liquid) is preferably 0.9 or higher and 1.1 or lower. The ratio of the density of the first liquid contained in the colorant composition to the density of the second liquid (density of first liquid/density of second liquid) is preferably 0.9 or higher and 1.1 or lower. In the case where these ratios are each 0.9 or higher and 1.1 or lower, a pattern of the core-shell particles can be prevented from floating or sinking in the second liquid. From this viewpoint, each of the ratios is more preferably 0.92 or higher and 1.08 or lower, still more preferably 0.95 or higher and 1.05 or lower.

Injecting the colorant composition in which the core-shell particles are dispersed in the first liquid into the second liquid and thereby forming a pattern of the core-shell particles enable drawing a pattern, such as a character, a line, or a picture, of the core-shell particles in the second liquid, which serves as a field, and also maintaining its shape. This can provide a liquid containing a pattern of the core-shell particles (pattern-containing liquid).

The pattern may be any of a 1D pattern (line), a 2D pattern (plane), and a 3D pattern (solid). Examples of the pattern include, but are not limited to, visible patterns such as symbols, including characters, lines, and pictures, those generating taste, aroma, mouthfeel, or texture such as uneven distribution of components, and those generating these senses in combination.

The first core-shell particles may aggregate in a noncovalent manner to generate mouthfeel or texture. This allows a pattern of the core-shell particles to have a spatial design of mouthfeel or texture. The core-shell particles may be aggregated in a noncovalent manner by any method. For example, the surfaces of the core-shell particles may be charged with electricity for aggregation.

The colorant composition to be injected into the second liquid may include one colorant composition or may include two or more colorant compositions. For example, two or more colorant compositions between which at least one of the type of the first core-shell particles or the type of the first liquid is different may be simultaneously or successively injected into the second liquid.

The second liquid in which a pattern is to be formed is a liquid in a container (liquid contained in a container). The container may be any one and is selected as appropriate in accordance with the second liquid. For example, in the case where the second liquid is a drink, a container capable of containing the drink may be used. In an embodiment, to make a pattern visible from the outside, the container is preferably a transparent container. Examples of a transparent container capable of containing a drink include transparent glassware or cups made of transparent glass as well as transparent drink cups made of plastic.

To make a pattern of the first core-shell particles visible from the outside of the second liquid, the second liquid preferably has transparency that allows the pattern to be visible through the second liquid. From the same viewpoint, the second liquid may be either a colored or colorless, transparent liquid.

The first liquid and the second liquid may be liquids of different types or may be liquids of the same type. The first liquid and the second liquid each may be a single type of liquid or may include multiple types of liquids which are mixed with or separated from each other. To maintain a pattern of the core-shell particles in a liquid for a long term, the first liquid contained in the colorant composition is preferably one compatible with the second liquid to form a pattern, and may be the same liquid as the second liquid or a liquid similar to the second liquid. This is described in detail below.

The first liquid contained in the colorant composition and the second liquid each preferably have a viscosity of 0.8 to 100 mPa·s at 25°C. In the case where they each have a viscosity of 0.8 to 100 mPa·s at 25°C, diffusion of the first liquid in the second liquid can be easily reduced. This allows a pattern of the first core-shell particles to maintain its shape in the second liquid for a longer term. From this viewpoint, the viscosity of the first liquid and the viscosity of the second liquid are more preferably 1 to 100 mPa·s, still more preferably 1 to 50 mPa·s, at 25°C. The viscosity of the first liquid may be higher than the viscosity of the second liquid or vice versa, or they may be substantially equal to each other. The temperature difference between the first liquid and the second liquid is preferably 0°C to 10°C, more preferably 0°C to 5°C. The temperature of the first liquid may be higher than the temperature of the second liquid or vice versa, but preferably they are substantially equal to each other.

In the method of the present invention, for example, the colorant composition may be discharged into a liquid (second liquid) in a container using a position-controllable nozzle, thereby forming a pattern of the first core-shell particles in the liquid. In a preferred embodiment of the colorant composition, the core-shell particles are dispersed in the first liquid.

The following describes an example of the method for forming a pattern in a liquid of the present invention, specifically, a method including discharging, using a position-controllable nozzle, a colorant composition (pattern-forming material) in which the first core-shell particles are dispersed in a first liquid into a second liquid, thereby forming a pattern of the core-shell particles.

The nozzle is a hollow pipe having an opening at each end. The colorant composition in which the first core-shell particles are dispersed in the first liquid is introduced through the proximal end of the nozzle, passed through the hollow inside the nozzle, and then discharged through the distal end of the nozzle. The three-dimensional position of the nozzle and the discharge flow rate of the pattern-forming material discharged through the distal end of the nozzle are commonly controlled by a controller of a system for producing a pattern-containing liquid to be described later. Any number of nozzles, such as one nozzle or multiple nozzles, may be used.

The nozzle is preferably freely movable along multiple axes (e.g., three or more axes and eight or less axes). This enables easy formation of a pattern of the core-shell particles, such as a 3D pattern. Not only the nozzle but also a container of the third liquid may be moved.

Preferably, the second liquid is contained in a container (e.g., glassware or cup) and the nozzle has a length that is at least greater than the depth of the second liquid contained in the container. This enables forming a pattern of the first core-shell particles at any position in the second liquid using the nozzle.

The distal end of the nozzle may have any opening shape. The nozzle preferably has a circular, elliptic, triangular, rectangular, square, rhombic, V-shaped, U-shaped, or C-shaped distal end.

The second liquid into which the colorant composition is to be discharged may also contain the core-shell particles. The core-shell particles contained in the second liquid are referred to as the second core-shell particles. The core-shell particles, when contained in the second liquid, may be dispersed in the second liquid. In other words, the second core-shell particles may be dispersed in the second liquid and the colorant composition may be discharged into the second liquid in which the core-shell particles are dispersed. The second core-shell particles and preferred embodiments thereof are the same as the first core-shell particles and preferred embodiments thereof. The second liquid may be one not containing the core-shell particles.

In the case where the core-shell particles (second core-shell particles) are contained in the second liquid, the weight percent concentration thereof in the second liquid may be less than 74 wt%, preferably 0.1 wt% or more and 70 wt% or less, more preferably 1 wt% or more and 60 wt% or less, still more preferably 5 wt% or more and 50 wt% or less.

The second core-shell particles are preferably not chemically bonded to each other with a cross-linker. This can prevent the second core-shell particles to form a mass. Thereby, in the case of a drink, for example, the second core-shell particles are more easily drinkable with the third liquid.

Similarly to the cases of the first core-shell particles and the second liquid, the ratios of the density of the second core-shell particles to the density of the first core-shell particles, to the density of the first liquid, and to the density of the second liquid (density of second core-shell particles/density of first core-shell particles, density of second core-shell particles/density of first liquid, and density of second core-shell particles/density of second liquid) are each preferably 0.9 or higher and 1.1 or lower. Each of these ratios is more preferably 0.92 or higher and 1.08 or lower, still more preferably 0.95 or higher and 1.05 or lower.

The second core-shell particles contained in the second liquid may aggregate in a noncovalent manner to generate mouthfeel or texture. This can generate mouthfeel or texture in the second liquid in which the second core-shell particles are dispersed and thereby generate a difference in mouthfeel or texture between a pattern of the core-shell particles in the colorant composition and the second liquid in which the second core-shell particles are dispersed.

A pattern in a liquid can be formed, for example, using the colorant composition as a pattern-forming material and using a system for producing a pattern-containing liquid to be described below. The following describes a system for producing a pattern-containing liquid that can be used in the present invention (hereinafter, also simply referred to as a production system).

The production system is a system for producing a pattern-containing liquid in which a pattern is formed in a liquid. The production system preferably includes: a tank configured to contain a pattern-forming material (colorant composition) in which the core-shell particles are dispersed in a first liquid; a nozzle configured to discharge the pattern-forming material; a pump configured to deliver the pattern-forming material to the nozzle; and a controller configured to control the position of the nozzle and the discharge flow rate of the pattern-forming material to be discharged through the nozzle. This production system may be configured such that the pump feeds the pattern-forming material from the tank to the nozzle and the nozzle discharges the pattern-forming material to a predetermined position in the target liquid while the controller controls the position of the nozzle and the discharge flow rate of the pattern-forming material. The discharge flow rate of the pattern-forming material can be controlled by changing the pump pressure or the pressure inside the nozzle in response to voltage application to, for example, a piezoelectric element disposed at a nozzle portion. Accordingly, a pattern can be automatically formed in a liquid by designing a pattern using software such as CAD and controlling the nozzle based on this design. Thus, the above system can be used to automatically produce a pattern-containing liquid. In other words, the production system can produce a pattern-containing liquid having a higher flexibility in design of a pattern, in a liquid, that can generate any sense such as color vision, taste, aroma, mouthfeel, or texture.

The pattern-forming material contained in the tank may be delivered to the nozzle through a liquid delivery tube. The tank may be any container that can contain the pattern-forming material. The tank may be separated from the pump and nozzle or may be integrated with the pump and nozzle. Multiple tanks may be provided in accordance with the types of the pattern-forming materials.

The nozzle is as described above. The nozzle may be coupled with a piezoelectric element, for example. Applying voltage to this piezoelectric element can change the pressure inside the nozzle, thereby controlling the discharge flow rate of the pattern-forming material from the nozzle.

The pump may be any pump that can deliver the pattern-forming material to the nozzle, such as a syringe pump or a peristaltic pump.

The controller may be provided with a multi-axial mechanism (e.g., a mechanism having three or more and eight or less axes) coupled with the nozzle and configured to move the position of the nozzle. This controller can control the nozzle along multiple axes and move the nozzle three-dimensionally, i.e., form a 3D pattern easily. Examples of the multi-axial mechanism to be used include a gantry system (e.g., three axes) and a robot arm (e.g., eight axes).

To control the discharge flow rate of the pattern-forming material, the controller may control the pump pressure or may control the voltage applied to the piezoelectric element provided at the nozzle portion.

The controller may be further provided with a control processor that executes control-processing of components such as the nozzle, the pump, and the multi-axial mechanism. The control processor may include, for example, a software program to execute a variety of processing operations such as control-processing, a central processing unit (CPU) to execute the software program, and a variety of hardware devices (e.g., memory) controlled by the CPU. The software program (e.g., control program using 3D-CAD data) and data for operating the control processor are stored in the memory. The control processor may be provided together with the multi-axial mechanism at a place where a pattern-containing liquid is to be produced (e.g., in the same restaurant). Alternatively, an element related to at least one function of the control processor may be separately provided at a place different from the production site for a pattern-containing liquid (e.g., in the cloud).

The production system may further include a stage that can bear a container containing the second liquid, and the stage may be movably arranged. The controller may allow the nozzle to discharge the pattern-forming material into the second liquid while moving not only the nozzle but also the stage, i.e., the second liquid contained in a container.

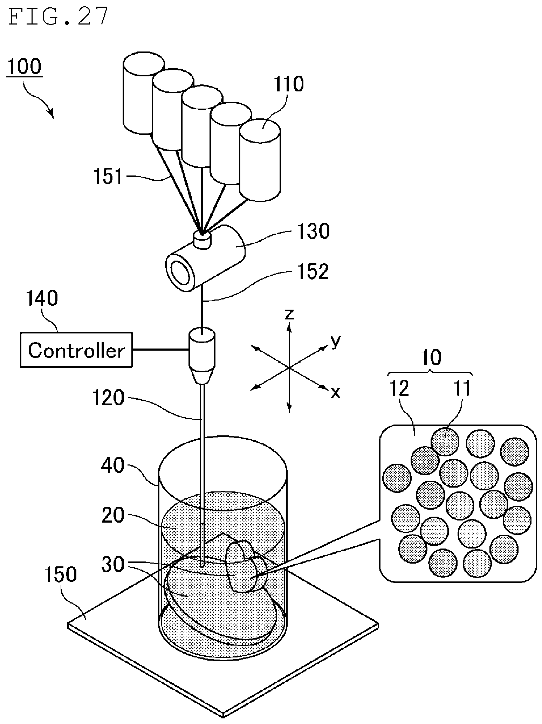

Fig. 27 is a conceptual diagram of an exemplary system, which can be used in the present invention, for producing a pattern-containing liquid in which a pattern is formed in a liquid. A system 100 for producing a pattern-containing liquid shown in Fig. 27 includes: multiple tanks 110 each containing a pattern-forming material (colorant composition) 10 in which core-shell particles 11 are dispersed in a first liquid 12; a nozzle 120 configured to discharge the pattern-forming material 10; a pump 130 configured to deliver the pattern-forming material 10 to the nozzle 120; a controller 140; a stage 150 configured to bear a container 40 containing a second liquid 20; liquid delivery tubes 151 that connect the tanks 110 and the pump 130; and a liquid delivery tube 152 that connects the pump 130 and the nozzle 120. The controller 140 is configured to control the position of the nozzle 120 and the discharge flow rate of the pattern-forming material 10 to be discharged through the nozzle 120. The production system 100 can automatically form a pattern 30 of the core-shell particles 11 in the second liquid 20. The tanks 110 may contain multiple, different types of pattern-forming materials 10, and such multiple types of pattern-forming materials 10 may be discharged through the nozzle 120 simultaneously or successively. The production system 100 may include multiple nozzles 120, and the multiple nozzles 120 may discharge multiple types of pattern-forming materials 10 simultaneously or successively.

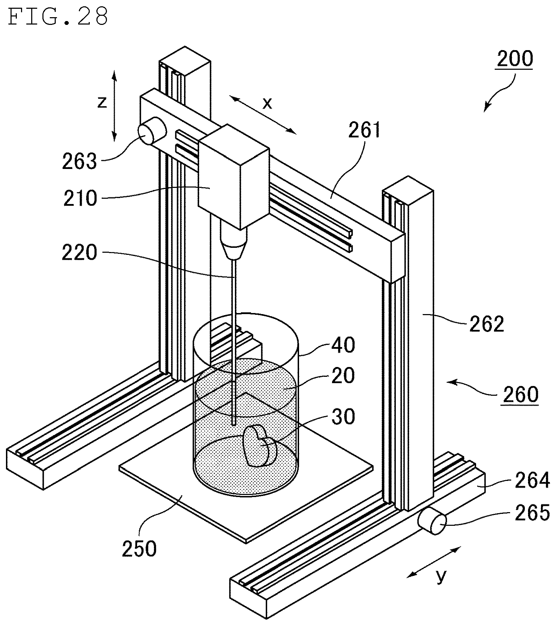

Fig. 28 is a conceptual diagram of an exemplary system, which can be used in the present invention, for producing a pattern-containing liquid in which a gantry system is used. A system 200 for producing a pattern-containing liquid shown in Fig. 28 includes: a tank 210 configured to contain a pattern-forming material (not shown) in which core-shell particles (not shown) are dispersed in a first liquid (not shown); a nozzle 220 configured to discharge the pattern-forming material; a stage 250 configured to bear a container 40 containing a second liquid 20; and a gantry system 260 serving as a multi-axial mechanism of a controller (not shown). The tank 210 is integrated with a pump (not shown) configured to deliver the pattern-forming material to the nozzle 220 and an x-axial drive motor (not shown) of the gantry system 260. The gantry system 260 is a triaxial drive mechanism, and includes an x-axial rail 261 that supports the tank 210 movably along the x axis, z-axial rails 262 that support the x-axial rail 261 movably along the z axis, a z-axial drive motor 263 configured to drive the x-axial rail 261 supported by the z-axial rails 262 along the z axis, y-axial rails 264 that support the respective z-axial rails 262 movably along the y axis, and a y-axial drive motor 265 configured to drive the z-axial rails 262 supported by the respective y-axial rails 264 along the y axis. Under the control by the controller, the system can flexibly move the nozzle 220 along the three axes. The controller is configured to control the position of the nozzle 220 by use of the gantry system 260 and control the discharge flow rate of the pattern-forming material to be discharged through the nozzle 220. The production system 200 can also automatically form a pattern 30 of the core-shell particles in the second liquid 20.

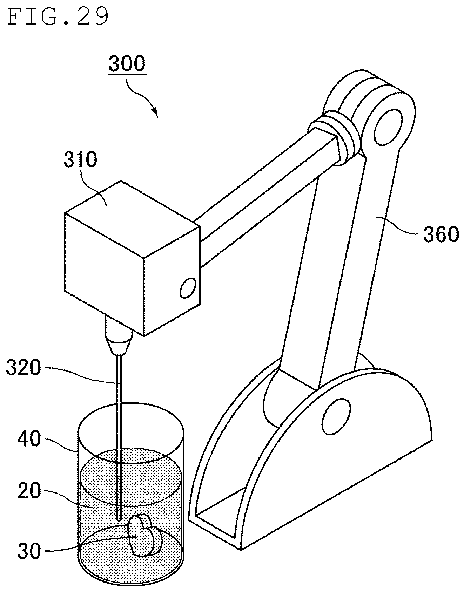

Fig. 29 is a conceptual diagram of an exemplary system, which can be used in the present invention, for producing a pattern-containing liquid in which a robot arm is used. A system 300 for producing a pattern-containing liquid shown in Fig. 29 includes: a tank 310 configured to contain a pattern-forming material (not shown) in which core-shell particles (not shown) are dispersed in a first liquid (not shown); a nozzle 320 configured to discharge the pattern-forming material; and a robot arm 360 serving as a multi-axial mechanism of a controller (not shown). The tank 310 is integrated with a pump (not shown) configured to deliver the pattern-forming material to the nozzle 320. The robot arm 360 is, for example, an eight-axial drive mechanism and can freely move the nozzle 320 along the eight axes under the control by the controller. The controller is configured to control the position of the nozzle 320 by use of the robot arm 360 and control the discharge flow rate of the pattern-forming material to be discharged through the nozzle 320. The production system 300 can also automatically form a pattern 30 of the core-shell particles in the second liquid 20.

Although the methods for forming a pattern in a liquid using a production system are described as examples hereinabove, the method for forming a pattern of the first core-shell particles in the second liquid is not limited thereto.

The method of the present invention can provide a pattern-containing liquid in which a pattern of the core-shell particles is formed in the second liquid. In a preferred embodiment, a drink is used as the second liquid and an edible colorant composition is used as the colorant composition (pattern-forming material), whereby a pattern-containing drink can be obtained.

Next, the second embodiment of the pattern-forming method of the present invention is described.

The first embodiment of the pattern-forming method and the second embodiment of the pattern-forming method are different merely in whether the colorant composition containing the core-shell particles (first core-shell particles) and the first liquid is injected into the second liquid in a container different from the colorant composition or a liquid (second liquid) different from the colorant composition is injected into the colorant composition. The features described for the first embodiment of the pattern-forming method can be applied as appropriate to the second pattern-forming method. The colorant composition is the same as that in the first embodiment of the pattern-forming method. The second liquid and preferred embodiments thereof are the same as the aforementioned second liquid and preferred embodiments thereof. In an embodiment, the colorant composition and second liquid to be used in the second embodiment of the pattern-forming method are preferably edible. The second liquid may contain the core-shell particles.

The second embodiment of the pattern-forming method can also form a pattern of the second liquid in the colorant composition.

The first embodiment of the pattern-forming method or the second embodiment of the pattern-forming method of the present invention can provide a pattern-containing liquid in which a pattern is formed in a liquid. The first embodiment of the pattern-forming method and the second embodiment of the pattern-forming method of the present invention can be used as a method for producing a pattern-containing liquid.

The present invention also encompasses a method for producing a pattern-containing liquid including injecting the colorant composition into a second liquid in a container to form a pattern of the core-shell particles in the second liquid; and a method for producing a pattern-containing liquid including injecting a second liquid into the colorant composition to form a pattern of the liquid in the colorant composition.

<Method for producing core-shell particles>

The aforementioned core-shell particles in the present invention can be produced, for example, by a method for producing core-shell particles including dispersing an oily component and a colorant in an aqueous phase to prepare a dispersion of core particles containing the oily component and the colorant; and stirring the dispersion of the core particles in the presence of a cationic polymer to prepare a dispersion of core-shell particles in which the individual core particle is encapsulated in a shell containing the cationic polymer.

In this production method, the weight ratio of the amount of the oily component blended to the amount of the cationic polymer blended (amount of oily component blended/amount of cationic polymer blended) is preferably 0.1 to 30.2. The step of preparing a dispersion of the core particles is referred to as a core-particles-preparation step. The step of preparing a dispersion of the core-shell particles is referred to as a core-shell-particles-preparation step.

The cationic polymer, the oily component, the colorant, and preferred embodiments thereof are the same as those for the core-shell particles. The cationic polymer is preferably an edible cationic polymer. The cationic polymer preferably includes chitosan and/or chitin, and is more preferably chitosan.

Dispersing the oily component and the colorant (core materials) in an aqueous phase can lead to forming droplets (core particles) containing the oily component and the colorant. Stirring this dispersion of the core particles in the presence of the cationic polymer can cause the individual core particle to be coated with the shell containing the cationic polymer. This provides core-shell particles in which the individual core particle is encapsulated in the shell containing the cationic polymer. In the core-shell-particles-preparation step, the cationic polymer can work as long as it is present in the dispersion of the core particles. The core-particles-preparation step and the core-shell-particles-preparation step may be performed in the presence of the cationic polymer. For example, the aqueous phase to be used in which the oily component and the colorant are to be dispersed may be an aqueous phase containing the cationic polymer. The cationic polymer may be added to the dispersion containing the core particles after the core-particles-preparation step.

The production method may include a step other than the core-particles-preparation step and the core-shell-particles-preparation step. The production method may include a step of preparing an aqueous phase and a step of preparing core materials.

The aqueous phase to be used may be water, for example. The aqueous phase may be a liquid mixture containing water, buffer salt, and an acidity regulator, for example. The aqueous phase may or may not contain a cationic polymer. In an embodiment, the core-particles-preparation step may be such that the oily component and the colorant are dispersed in the aqueous phase containing the cationic polymer to prepare a dispersion of the core particles containing the oily component and the colorant. Further stirring this dispersion of the core particles can lead to preparing a dispersion of the core-shell particles in which the core is encapsulated in the shell containing the cationic polymer.

The aqueous phase containing a cationic polymer may be prepared by any method. Preferably, the aqueous phase is prepared by dissolving the cationic polymer in water. A method of dissolving the cationic polymer in water may be selected as appropriate in accordance with the cationic polymer. For example, in the case of using chitosan as a cationic polymer, chitosan is mixed with water containing an acid so that an aqueous phase containing chitosan can be prepared.

This acid is preferably an edible acid, preferably such as acetic acid, citric acid, or lactic acid, more preferably acetic acid. The concentration of the acid in water to be mixed with chitosan may be 0.35 to 35 wt%. The pH of water containing an acid is preferably 3 to 6, more preferably 3.5 to 4.5. The pH herein refers to pH at 25°C.

To sufficiently dissolve the cationic polymer, the temperature at which the cationic polymer and water are mixed with each other is preferably 10°C to 80°C, more preferably 40°C to 70°C. The amount of the cationic polymer contained in the aqueous phase is preferably 0.05 to 5 wt%, more preferably 0.1 to 3 wt%.

In the case of using chitosan as a cationic polymer, the aqueous phase containing chitosan in which the core materials are to be dispersed preferably has a pH of 3 to 6. An aqueous phase having a pH within this range allows chitosan to well disperse in the liquid and to well interact with the core materials, making it easy to form a shell. After chitosan is mixed with water containing an acid, the pH of the aqueous phase may optionally be adjusted. The pH may be adjusted with an acid or a base. The aqueous phase may contain an emulsifier to be described later, for example.

The oily component and the colorant, which are materials for forming a core, may be separately added to the aqueous phase. Alternatively, a mixture containing the oily component and the colorant may be added to the aqueous phase. This mixture containing the oily component and the colorant may be prepared by any method, and may be prepared by mixing the oily component and the colorant as well as other components optionally added. The total amount of the oily component and the colorant contained in the mixture is preferably 10 to 100 wt%, more preferably 10 to 99 wt%, still more preferably 20 to 95 wt%. A preferred range of the amount of the colorant used relative to that of the oily component is the same as the preferred range of the weight ratio of the colorant to the oily component (colorant/oily component) in the core-shell particles. The amount of the oily component used is preferably 0.01 to 5 wt%, more preferably 0.1 to 2 wt%, in the aqueous phase. The weight ratio of the colorant to the oily component (colorant/oily component) is preferably 0.001 to 0.3, more preferably 0.003 to 0.2, still more preferably 0.005 to 0.1.

The core-particles-preparation step and the core-shell-particles-preparation step are preferably performed in the presence of an emulsifier. Preparing a dispersion of the core-shell particles using an emulsifier may cause the resulting core-shell particles to have a narrow particle size distribution. The emulsifier and preferred embodiments thereof are the same as those for the core-shell particles. The emulsifier is preferably a nonionic surfactant having an HLB of 15 to 17 or a thickening polysaccharide. In the case of using an emulsifier, the core-particles-preparation step may be such that the oily component and the colorant are added to and dispersed in the aqueous phase containing an emulsifier, or that the oily component, the colorant, and an emulsifier are added to the aqueous phase and resultantly the oily component and the colorant are dispersed therein, or that the oily component and the colorant mixed with an emulsifier are added to the aqueous phase and resultantly the oily component and the colorant are dispersed therein.

In the case of using a nonionic surfactant having an HLB of 15 to 17 as an emulsifier, this nonionic surfactant is preferably contained in the aqueous phase. In an embodiment, a core-particles-preparation step is preferably such that the oily component and the colorant are dispersed in the aqueous phase containing a nonionic surfactant having an HLB of 15 to 17. In another embodiment, the oily component, the colorant, and a nonionic surfactant having an HLB of 15 to 17 may be added to the aqueous phase and resultantly the oily component and the colorant may be dispersed therein. Stirring the resulting dispersion of the core particles in the presence of the cationic polymer can lead to preparing a dispersion of the core-shell particles in which the core containing the oily component and the colorant as well as the nonionic surfactant are encapsulated in the shell containing the cationic polymer.

The amount of the nonionic surfactant having an HLB of 15 to 17 used relative to that of the oily component is preferably 1 to 200 wt%, more preferably 5 to 100 wt%.

In the case of using a thickening polysaccharide as an emulsifier, the thickening polysaccharide is preferably mixed with the oily component. In an embodiment, core materials including the oily component, the colorant, and a thickening polysaccharide are preferably dispersed in the aqueous phase. Stirring the resulting dispersion of the core particles in the presence of the cationic polymer can lead to preparing a dispersion of the core-shell particles in which the core containing the oily component, the colorant, and the thickening polysaccharide is encapsulated in the shell containing the cationic polymer.

The thickening polysaccharide is preferably used such that the amount of the thickening polysaccharide relative to the total weight of the oily component, the colorant, and the emulsifier is preferably 0.1 to 20 wt%, more preferably 2.5 to 10 wt%.

In the core-particles-preparation step, the oily component and the colorant may be dispersed in the aqueous phase by any method. From the viewpoint of uniformity in the particle size of the core-shell particles, preferred is a method of adding dropwise the oily component and the colorant while stirring the aqueous phase. Adding dropwise the oily component and the colorant while stirring the aqueous phase can lead to well dispersing the oily component and the colorant in the aqueous phase. The temperature during mixing the aqueous phase with the oily component and the colorant is preferably, but not limited to, 10°C to 80°C, more preferably 40°C to 70°C.

The stirring speed may be, but is not limited to, 500 to 12000 rpm. The stirring time may be 1 to 120 minutes, for example, and is preferably 3 to 30 minutes.

The dispersion of the core particles obtained in the core-particles-preparation step may contain the aforementioned cationic polymer and/or emulsifier. In the case where the dispersion of the core particles contains the cationic polymer, stirring this dispersion can lead to a dispersion of the core-shell particles in which the individual core particle is encapsulated in the shell containing the cationic polymer. In another embodiment, adding the cationic polymer to the dispersion of the core particles and stirring the system can lead to a dispersion of the core-shell particles. In the core-shell-particles-preparation step, the cationic polymer is contained in the dispersion of the core particles in an amount of preferably 0.05 to 5 wt%, more preferably 0.1 to 3 wt%. In the core-shell-particles-preparation step, the stirring speed is preferably 100 to 500 rpm, more preferably 100 to 300 rpm, for example. The stirring time is preferably 1 to 120 minutes, more preferably 5 to 60 minutes, for example. The core-shell-particles-preparation step is preferably performed at 10°C to 80°C.

The dispersion of the core particles and the dispersion of the core-shell particles may be prepared by stirring using a reaction container equipped with a stirring blade, or may be prepared using a device commonly used for emulsification or dispersion, such as a homogenizer or a membrane emulsification device.

In the production method, the weight ratio of the amount of the oily component blended to the amount of the cationic polymer blended (oily component/cationic polymer) is preferably adjusted such that the resulting core-shell particles have a density of 0.9 to 1.1 g/cm³.

In an embodiment, the weight ratio of the amount of the oily component blended to the amount of the cationic polymer blended (amount of oily component blended/amount of cationic polymer blended) is preferably 0.1 to 30.2, more preferably 0.7 to 20.0, still more preferably 1.1 to 10.0. To provide core-shell particles having a density within this range, the weight ratio of the amount of the oily component blended to the amount of the cationic polymer blended preferably falls within this range.

The core-shell-particles-preparation step can provide a dispersion of the core-shell particles in which the core containing the oily component and the colorant is encapsulated in the shell containing the cationic polymer. The resulting core-shell particles can be used for a drink, for example, as described above, and the cationic polymer is preferably cross-linked with a cross-linker.

The above method preferably includes a cross-linking step of cross-linking the cationic polymer by mixing the dispersion of the core-shell particles obtained in the core-shell-particles-preparation step with a cross-linker. The cross-linker and preferred embodiments thereof are the same as the cross-linker in the core-shell particles and preferred embodiments thereof. The cross-linker may be added by any method. For example, in the case of using an anionic molecule, preferably, a cross-linker is dissolved in water to prepare an aqueous solution and this aqueous solution is added to the dispersion.

The amount of the cross-linker used is preferably 0.3 to 10, more preferably 1.5 to 6 relative to the weight of the cationic polymer, which is taken as 100. The temperature during mixing the dispersion with the cross-linker is preferably 10°C to 80°C, more preferably 40°C to 70°C.

The dispersion of the core-shell particles obtained by the above method can be used as the aforementioned colorant composition of the present invention. The core-shell particles may be separated, by any known method, from the dispersion of the core-shell particles obtained by the above method. Dispersing the separated core-shell particles in the first solvent can provide the colorant composition. The dispersion medium in the dispersion obtained above may be replaced by a solvent as desired. The above method may include a step of purifying the core-shell particles from the resulting dispersion of the core-shell particles. Purifying the core-shell particles may be achieved by any method, such as centrifuging the dispersion. This centrifugation can provide core-shell particles having a narrower particle size distribution. The above method may include a step of measuring the density of the resulting core-shell particles. Alternatively, the dispersion of the core-shell particles may be concentrated with an ultrafiltration membrane. Concentration with an ultrafiltration membrane enables collecting and concentrating particles lighter than the solvent.

The following colorant compositions are also described herein.

<1> A colorant composition containing a first liquid and core-shell particles, the core-shell particles each including a core and a shell that encapsulates the core, the core containing an oily component and a colorant, the shell containing a cationic polymer, the core-shell particles being dispersed in the first liquid.

In the colorant composition of the clause <1>, the cationic polymer is preferably an edible cationic polymer. Preferred embodiments of the colorant composition of the clause <1> are the same as those of the aforementioned colorant composition of the present invention. The colorant composition of the clause <1> can be suitably used for forming a pattern of the core-shell particles in the second liquid.

The numerical ranges represented by the lower limit and the upper limit, i.e., "lower limit to upper limit", herein include the lower limit and the upper limit. For example, the range represented by "1 to 2" means 1 or greater and 2 or smaller, including 1 and 2. The upper limits and the lower limits herein may be used in any combination to form a range. The academic literature and patent literature mentioned herein are incorporated herein by reference.

EXAMPLES

The present invention is described in more detail below with reference to examples, but the scope of the present invention is not limited by these examples.

The laser diffraction particle size distribution analyzer used was SALD-2300 available from Shimadzu Corp.

The viscosity (25°C) was measured using a tuning fork vibro viscometer SV-10 available from A&D Co., Ltd.

Unless otherwise mentioned, the operations in the examples were performed at room temperature (25°C).

<Production Example 1>

To 317 g of distilled water were added 3.2 mL of acetic acid (Fujifilm Wako Pure Chemical Corp., Cas RN. 64-19-7) and 1.6 g of Chitosan 10 (Fujifilm Wako Pure Chemical Corp., Cas RN. 9012-76-4, degree of deacetylation: 80% or higher). The contents were stirred under heating to 60°C, so that chitosan was dissolved. After chitosan was dissolved to form a solution, about 12 mL of a 2N aqueous NaOH solution was added dropwise and the pH of the solution was adjusted to fall within a range of 4.7 to 4.8. Thereby, an aqueous chitosan solution was obtained. Separately, 2 mL of oleic acid (Fujifilm Wako Pure Chemical Corp., Cas RN. 112-80-1) was combined with 0.01 g of β-carotene (Fujifilm Wako Pure Chemical Corp., Cas RN. 7235-40-7) and 2 mL (1.85 g) of Tween 80 (Fujifilm Wako Pure Chemical Corp., Cas RN. 9005-65-6, HLB 15.8). The contents were stirred, whereby a colorant solution was obtained.

Then, 320 mL of the aqueous chitosan solution was moved to a stirring vessel and stirred at 200 rpm using a general-purpose agitator BL600 (Shinto Scientific Co., Ltd.) while heated to 60°C in a water bath (Thermal Robot TR-2, As One Corp.). To the heated and stirred aqueous chitosan solution was added dropwise 4 mL of the colorant solution at a rate of 0.4 mL/min using a syringe pump (SPS-2, As One Corp.). The resulting solution mixture, 324 mL, was processed at 12000 rpm for five minutes using a homogenizer (digital ULTRA-TURRAX, IKA, equipped with S25N-18G dispersion tool), so that the solution mixture was emulsified. The emulsified solution was placed in a water bath, and stirred at 200 rpm while heated to 60°C. After one hour, 100 mL of the emulsified solution was sampled and used for measurement of the particle size distribution of the particles before cross-linking. The rest of the solution was combined with 96 mL of aqueous sodium tripolyphosphate solution (0.52 g/L, Tokyo Chemical Industry Co., Ltd., CAS RN. 7758-29-4) as a cross-linker, which was dispensed into two 50-mL syringes and added dropwise to the solution simultaneously in two directions using a syringe pump (SPS-2, As One Corp.) at a rate of 4.8 mL/min. After the dropwise addition, the mixture was placed in a water bath, and stirred at 200 rpm for one hour while heated to 60°C. Thereby, a dispersion of colorant-encapsulating chitosan particles was obtained. The colorant-encapsulating chitosan particles obtained in Production Example 1 are referred to as Particles (P1). The appearance of the dispersion of Particles (P1) was yellow and uniform. Immediately after the construction, the dispersion was left at 25°C for one hour, but none of sinking of the particles, floating of the particles on the surface of the dispersion, and separation of the solution and the particles were observed.

<Production Example 2>

To 267 g of distilled water were added 3.2 mL of acetic acid (Fujifilm Wako Pure Chemical Corp., Cas RN. 64-19-7) and 1.6 g of Chitosan 10 (Fujifilm Wako Pure Chemical Corp., Cas RN. 9012-76-4, degree of deacetylation: 80% or higher). The contents were stirred under heating to 60°C, so that chitosan was dissolved. After chitosan was dissolved to form a solution, about 12 mL of a 2N aqueous NaOH solution was added dropwise and the pH of the solution was adjusted to fall within a range of 4.7 to 4.8. Thereto was added 2 g of an emulsifier (decaglycerol laurate L-7D, Mitsubishi Chemical Corp., HLB 17) dissolved in 50 g of distilled water, whereby an aqueous chitosan solution was obtained. Separately, 2 mL of oleic acid (Fujifilm Wako Pure Chemical Corp., Cas RN. 112-80-1) was combined with 0.01 g of β-carotene (Fujifilm Wako Pure Chemical Corp., Cas RN. 7235-40-7). The contents were stirred, whereby a colorant solution was obtained.

Then, 320 mL of the aqueous chitosan solution was moved to a stirring vessel and stirred at 200 rpm using a general-purpose agitator BL600 (Shinto Scientific Co., Ltd.) while heated to 60°C in a water bath (Thermal Robot TR-2, As One Corp.). To the heated and stirred aqueous chitosan solution was added dropwise 2 mL of the colorant solution at a rate of 0.2 mL/min using a syringe pump (SPS-2, As One Corp.). The resulting solution mixture, 324 mL, was processed at 12000 rpm for five minutes using a homogenizer (digital ULTRA-TURRAX, IKA, equipped with S25N-18G dispersion tool), so that the solution mixture was emulsified. The emulsified solution was placed in a water bath, and stirred at 200 rpm while heated to 60°C. After one hour, 100 mL of the solution was sampled. The rest of the solution was combined with 96 mL of aqueous sodium tripolyphosphate solution (0.52 g/L, Tokyo Chemical Industry Co., Ltd., CAS RN. 7758-29-4) as a cross-linker, which was dispensed into two 50-mL syringes and added dropwise to the solution simultaneously in two directions using a syringe pump (SPS-2, As One Corp.) at a rate of 4.8 mL/min. After the dropwise addition, the mixture was placed in a water bath, and stirred at 200 rpm for one hour while heated to 60°C. Thereby, a dispersion of colorant-encapsulating chitosan particles was obtained. The colorant-encapsulating chitosan particles obtained in Production Example 2 are referred to as Particles (P2). The appearance of the dispersion of Particles (P2) was yellow and uniform. Immediately after the construction, the dispersion was left at 25°C for one hour, but none of sinking of the particles, floating of the particles on the surface of the dispersion, and separation of the solution and the particles were observed.

<Example 1>

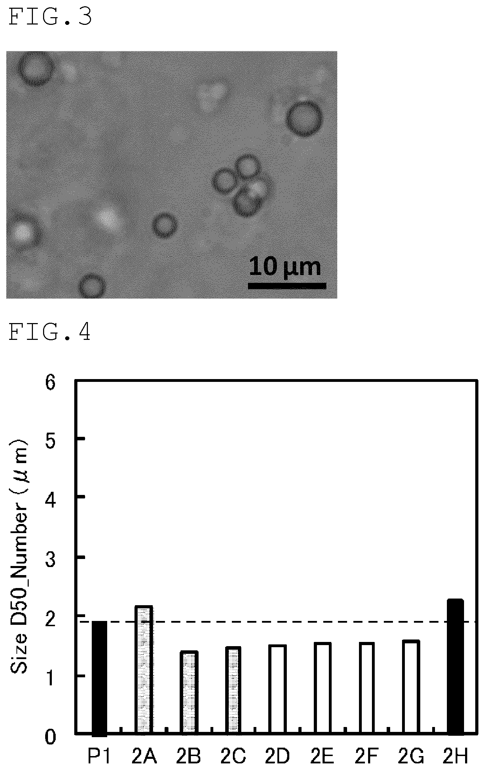

The particle size distributions of the particles before cross-linking and of the particles after cross-linking (Particles (P1)), which were obtained in Production Example 1, were determined using the laser diffraction particle size distribution analyzer. The particles obtained in Production Example 1 were colorant-encapsulating chitosan particles produced using reagent grade materials. FIG. 2A shows the number-based particle size distribution and volume-based particle size distribution of the particles before cross-linking (solid line: number-based, dotted line: volume-based). FIG. 2B shows the number-based particle size distribution and volume-based particle size distribution of the particles (Particles (P1)) after cross-linking with sodium tripolyphosphate (TPP) (solid line: number-based, dotted line: volume-based).
Before cross-linking with TPP by ionic bond, the mean number diameter was 2.1 $\mu$m and the mean volume diameter was 3.1 $\mu$m (FIG. 2A). After cross-linking with TPP, the mean number diameter was 1.8 $\mu$m and the mean volume diameter was 3.5 $\mu$m (FIG. 2B).
Observing the particles after cross-linking with TPP under a digital microscope (Keyence Corp.) revealed the presence of the core-shell particles encapsulating the colorant. FIG. 3 shows a micrograph of the dispersion of Particles (P1). Particles (P1) were core-shell particles each including the core containing oleic acid and the colorant as well as the shell encapsulating the core and containing chitosan. These results demonstrate that the present process can provide colorant-encapsulating chitosan particles (core-shell particles in which the core contains the colorant) having a diameter of several micrometers. Particles (P2) obtained in Production Example 2 were also core-shell particles each including the core containing oleic acid and the colorant as well as the shell encapsulating the core.

<Example 2>

(1) Production of particles with Chitosan 10 changed

Chitosan 10 in Production Example 1 was changed to food-grade chitosan shown in Table 1. Except for this, a dispersion of Colorant-encapsulating chitosan particles (2A) and a dispersion of Colorant-encapsulating chitosan particles (2B) were produced by the same method as in Production Example 1.

(2) Production of particles with oily component changed

Oleic acid in Production Example 1 was changed to edible fat or oil shown in Table 1. Except for this, dispersions of Colorant-encapsulating chitosan particles (2C), (2D), (2E), (2F), and (2G) were produced by the same method as in Production Example 1.

(3) Production of particles with sodium tripolyphosphate changed

Sodium tripolyphosphate (Tokyo Chemical Industry Co., Ltd.) in Production Example 1 was changed to food grade sodium tripolyphosphate. Except for this, a dispersion of Colorant-encapsulating chitosan particles (2H) was produced by the same method as in Production Example 1.
Table 1 shows the materials used.

[Table 1]

| Particles | Material |
|---|---|
| 2A | Chitosan LL-40 (derived from crab) |
| 2B | Chitosan KiOnutrime-CsG |
| 2C | Olein Rich |
| 2D | Organic high oleic sunflower oil |
| 2E | Safflower oil |
| 2F | Sunflower oil |
| 2G | Olive oil |
| 2H | Sodium tripolyphosphate |

The materials shown in Table 1 are as follows.

Chitosan LL-40 (derived from crab) (trade name): Yaizu Suisankagaku Industry Co., Ltd., degree of deacetylation 80% or higher
Chitosan KiOnutrime-CsG (trade name): Sceti K.K., degree of deacetylation 70% or higher
Olein Rich (trade name): edible sunflower oil, Showa Sangyo Co., Ltd.
Organic high oleic sunflower oil (trade name): Settsu Inc.
Safflower oil, Sunflower oil, and Olive oil: Summit oil mill Co., Ltd.
Sodium tripolyphosphate: Mitejima Chemical Co., Ltd.

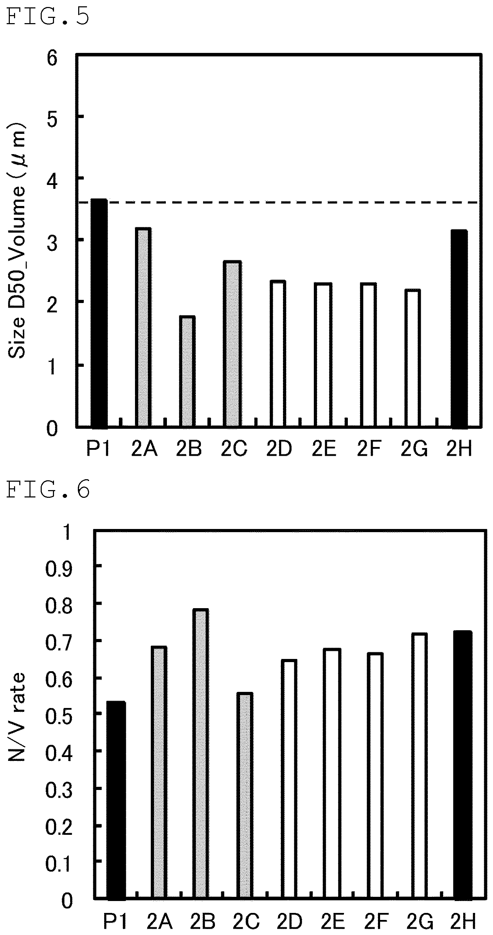

The mean number diameters and mean volume diameters of the resulting Colorant-encapsulating chitosan particles (2A) to (2H) were determined using the laser diffraction particle size distribution analyzer. The mean number diameters are shown in FIG. 4 and the mean volume diameters are shown in FIG. 5. The ratio of the mean number diameter to the mean volume diameter was then calculated and the uniformity of the particles constructed from the corresponding material was evaluated. The ratios of the mean number diameter and the mean volume diameter (mean number diameter/mean volume diameter; N/V rate) are shown in FIG. 6. In FIG. 4, FIG. 5, and FIG. 6, P1 in the horizontal axis represents Particles (P1) and 2A to 2H respectively represent Colorant-encapsulating chitosan particles (2A) to (2H). Each case revealed that particles similar to the particles obtained in Production Example 1 were formed. Colorant-encapsulating chitosan particles (2A) to (2H) were core-shell particles each including the core containing the oily component and the colorant as well as the shell encapsulating the core. The closer the ratio of the mean number diameter to the mean volume diameter is to 1, the more uniform the particles constructed is. Using an edible material successfully led to production of colorant-encapsulating chitosan particles (core-shell particles containing the colorant in the core). The appearance of each of the dispersions of Colorant-encapsulating chitosan particles (2A) to (2H) was yellow and uniform. Immediately after the construction, the dispersion was left at 25°C for one hour, but none of sinking of the particles, floating of the particles on the surface of the dispersion, and separation of the solution and the particles were observed.

<Example 3>

The emulsifier (Tween 80) in Production Example 1 was changed to one of the food-grade materials No. 3A to 3D shown in Table 2 so as to experimentally construct colorant-encapsulating chitosan particles. A nonionic surfactant having an HLB close to the HLB (15.8) of Tween 80 and polymers having an emulsifying effect were examined.

[Table 2]

| No. | Emulsifier |
|-----|------------|
| 3A | Decaglycerol laurate L-7D |
| 3B | Heat Sol Yurumi L |
| 3C | Heat Sol Yawara L |
| 3D | Ema Heat LV |

The emulsifiers shown in Table 2 are as follows.

Decaglycerol laurate L-7D (HLB: 17): MitsubishiChemical Corp.
Heat Sol Yurumi L, Heat Sol Yawara L, and Ema Heat LV (trade name): hydroxypropyl methylcellulose (HPMC) available from Unitec Foods Co., Ltd.

(1) Method of Production Example 1 with emulsifier changed

First, 1.85 g of an emulsifier was added to oleic acid for dissolution such that the amount was equivalent to that of Tween 80, but decaglycerol laurate, No. 3A in Table 2, was coagulated or whipped and failed to dissolve. Hydroxypropyl methylcellulose (HPMC) having an emulsifying effect, Nos. 3B to 3D in Table 2, had poor solubility in the oily component and a large part thereof remained undissolved. Accordingly, they were not able to pass through the injection syringe to a reaction vessel and were therefore not successfully used.

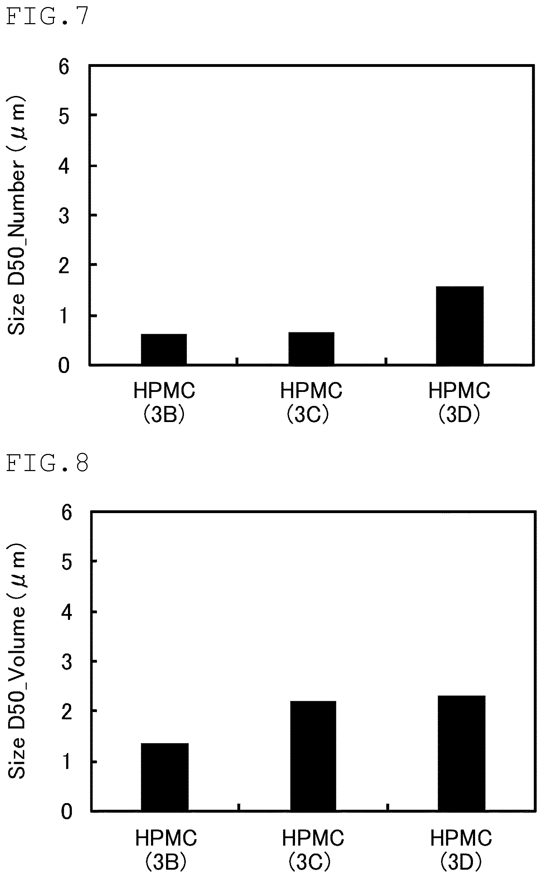

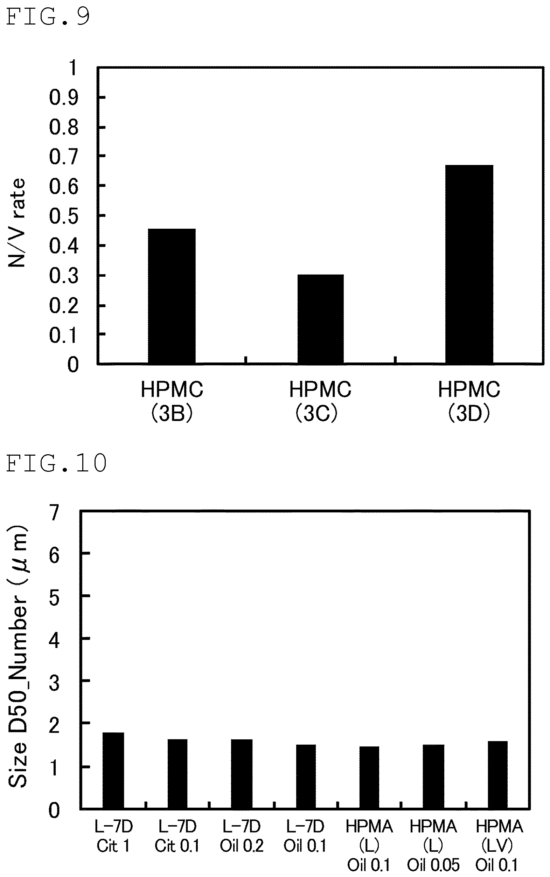

For HPMC (Nos. 3B, 3C, and 3D in Table 2), which were observed to be slightly dissolved, the amount of the emulsifier suspended in 2 mL of oleic acid was reduced from 1.85 g to 0.19 g so as to experimentally form particles by the method as in Production Example 1. Then, the mean number diameters and mean volume diameters of the particles contained in the resulting solutions were determined using the laser diffraction particle size distribution analyzer. The mean number diameters of the colorant-encapsulating chitosan particles produced using HPMC are shown in FIG. 7 and the mean volume diameters thereof are shown in FIG. 8. The ratio (N/V rate) of the mean number diameter and the mean volume diameter was then calculated and the uniformity of the particles constructed from the corresponding material was evaluated. The ratios (N/V rates) of the mean number diameter and the mean volume diameter are shown in FIG. 9. In FIG. 7, FIG. 8, and FIG. 9, HPMC (3B) represents the particles formed using Heat Sol Yurumi L, HPMC (3C) represents the particles formed using Heat Sol Yawara L, and HPMC (3D) represents the particles formed using Ema Heat LV. Each case resultantly revealed that particles having a size similar to that of the particles obtained in Production Example 1 were formed. The particles produced were core-shell particles each including the core containing the oily component and the colorant as well as the shell encapsulating the core. This reveals that using an oily component containing a small amount of HPMC also successfully led to production of colorant-encapsulating chitosan particles (core-shell particles containing the colorant in the core).

(2) Method of Production Example 2 with emulsifier changed

Instead of using decaglycerol laurate L-7D (reagent available from Mitsubishi Chemical Corp.) in the method of Production Example 2, the emulsifiers Nos. 3A to 3D in Table 2 were used to produce particles, whereby the emulsifiers were evaluated. In the method of Production Example 2, the emulsifier was dissolved in water to produce particles. As a result, using one selected from decaglycerol laurate, No. 3A, and HPMCs, Nos. 3B to 3D, in Table 2, led to completion of the particles-forming process. The particles produced were core-shell particles each including the core containing the oily component and the colorant as well as the shell encapsulating the core.
For the particles contained in the solution obtained using decaglycerol laurate, No. 3A in Table 2, the mean number diameter and the mean volume diameter were measured using the laser diffraction particle size distribution analyzer. The mean number diameter of the particles formed using decaglycerol laurate was 1.8 $\mu$m, the mean volume diameter thereof was 2.5 $\mu$m, and the ratio of the mean number diameter to the mean volume diameter (N/V rate) was 0.70.

<Example 4>

A dispersion of colorant-encapsulating chitosan particles was produced by the same method as in Production Example 1 or Production Example 2 while the type and amount of the emulsifier were changed, and the influence of this change on the resulting particles was examined. Table 3 shows the emulsifier, the amount thereof added, the target phase, and the production example applied (Production Example 1 or 2). The target phase refers to the solvent (water or oily component) to which the emulsifier was added. The emulsifier L-7D represents decaglycerol laurate L-7D (Mitsubishi Chemical Corp.), as well as Heat Sol Yawara L and Ema Heat LV (trade names) represent HPMCs available from Unitec Foods Co., Ltd.

[Table 3]

| ID in graph | Emulsifier | Production Example | Target phase | Amount added |
|---|---|---|---|---|
| L-7D Cit 1 | L-7D | 2 | Water | 1 g |
| L-7D Cit 0.1 | L-7D | 2 | Water | 0.1 g |
| L-7D Oil 0.2 | L-7D | 1 | Oily component | 0.2 g |
| L-7D Oil 0.1 | L-7D | 1 | Oily component | 0.1 g |
| HPMA(L) 0.1 | Heat Sol Yawara L | 1 | Oily component | 0.1 g |
| HPMA(L) 0.05 | Heat Sol Yawara L | 1 | Oily component | 0.05 g |
| HPMA(LV) 0.1 | Ema Heat LV | 1 | Oily component | 0.1 g |

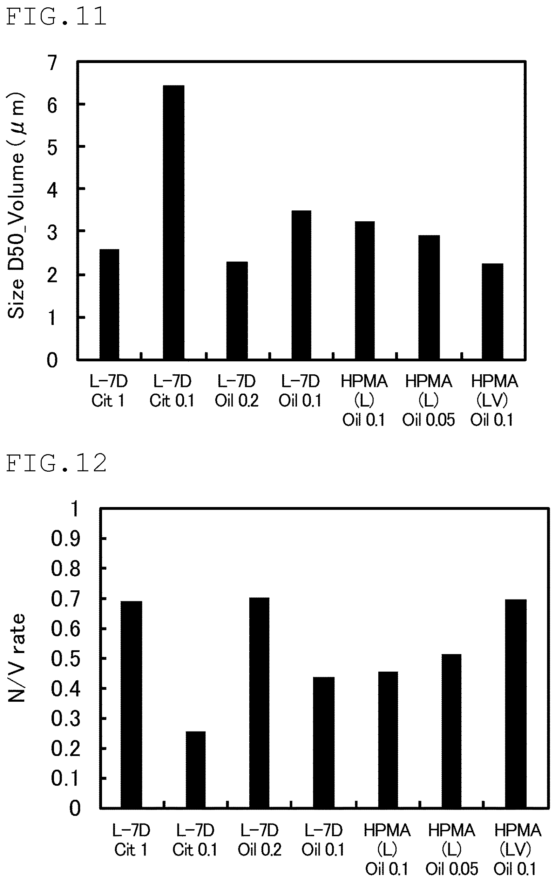

The mean number diameters and mean volume diameters of the particles contained in the resulting solutions were determined using the laser diffraction particle size distribution analyzer. The mean number diameters are shown in FIG. 10 and the mean volume diameters are shown in FIG. 11. The ratio (N/V rate) of the mean number diameter and the mean volume diameter was then calculated and the uniformity of the particles constructed from the corresponding material was evaluated. The ratios (N/V rates) of the mean number diameter and the mean volume diameter are shown in FIG. 12.
Each case revealed that good particles were formed. The particles produced were core-shell particles each including the core containing the oily component and the colorant as well as the shell encapsulating the core. In particular, the condition (L-7D Cit 1) where 1 g of L-7D was used in the method as in Production Example 2, the condition (L-7D Oil 0.2) where 0.2 g of L-7D was used in the method as in Production Example 1, and the condition (HPMA (LV) 0.1) where 0.1 g of Ema Heat LV was used as in Production Example 1 were revealed to give good particles. In the case of constructing particles without adding an emulsifier, colorant-encapsulating particles (core-shell particles containing the colorant in the core) were successfully constructed. The mean number diameter and mean volume diameter thereof were respectively 1.47 μm and 9.51 μm, and the ratio (N/V rate) thereof was 0.15. Using an emulsifier significantly improved the uniformity of the particles. The appearance of each of the resulting dispersions of the colorant-encapsulating chitosan particles was yellow and uniform. Immediately after the construction, the dispersion was left at 25°C for one hour, but none of sinking of the particles, floating of the particles on the surface of the dispersion, and separation of the solution and the particles were observed.

<Production Example 3>

To 267 g of distilled water were added 3.2 mL of glacial acetic acid (Kozakai Pharmaceutical Co., Ltd.) and 1.6 g of chitosan (KiOnutrime-CsG (Sceti K.K.) or Chitosan LL-40 (Yaizu Suisankagaku Industry Co., Ltd.)). The contents were stirred under heating to 60°C, so that chitosan was dissolved. After chitosan was dissolved to form a solution, about 12 mL of a 2N aqueous NaOH solution was added dropwise and the pH of the solution was adjusted to fall within a range of 4.7 to 4.8. Thereto was added 1 g of decaglycerol laurate L-7D (Mitsubishi Chemical Corp.) dissolved in 50 g of distilled water, whereby an aqueous chitosan solution was obtained. Separately, 1.8 mL of high oleic safflower oil (Summit Oil Mill, density 0.91) was combined with 0.2 mL of Nichino Color PO-5 (capsicum oleoresin 30%, tocopherol extract 2%, and food material 68%, Nichino Kagaku Kogyo Co., Ltd.). The contents were stirred, whereby a colorant solution was obtained.

Then, 320 mL of the aqueous chitosan solution was moved to a stirring vessel and stirred at 200 rpm using a general-purpose agitator BL600 (Shinto Scientific Co., Ltd.) while heated to 60°C in a water bath (Thermal Robot TR-2, As One Corp.). To the heated and stirred aqueous chitosan solution was added dropwise 2 mL of the colorant solution at a rate of 0.2 mL/min using a syringe pump (SPS-2, As One Corp.). The resulting solution mixture, 324 mL, was processed at 12000 rpm for five minutes using a homogenizer (digital ULTRA-TURRAX, IKA, equipped with S25N-18G dispersion tool), so that the solution mixture was emulsified. The emulsified solution was placed in a water bath, and stirred at 200 rpm while heated to 60°C. After one hour, 100 mL of the solution was sampled. The rest of the solution was combined with 96 mL of aqueous sodium tripolyphosphate solution (0.52 g/L, Mitejima Chemical Co., Ltd.) as a cross-linker, which was dispensed into two 50-mL syringes and added dropwise to the solution simultaneously in two directions using a syringe pump (SPS-2, As One Corp.) at a rate of 4.8 mL/min. After the dropwise addition, the mixture was placed in a water bath, and stirred at 200 rpm for one hour while heated to 60°C. Thereby, a dispersion of colorant-encapsulating chitosan particles was obtained. The appearance of each of the resulting dispersions of Colorant-encapsulating chitosan particles was orange and uniform. Immediately after the construction, the dispersion was left at 25°C for one hour, but none of sinking of the particles, floating of the particles on the surface of the dispersion, and separation of the solution and the particles were observed.

The colorant-encapsulating chitosan particles obtained using KiOnutrime-CsG in Production Example 3 are referred to as Particles (P3-1). The colorant-encapsulating chitosan particles obtained using chitosan LL-40 is referred to as Particles (P3-2). Particles (P3-1) and (P3-2) are colorant-encapsulating chitosan particles constructed using food grade materials.

The dispersion of the colorant-encapsulating chitosan particles (Particles (P3-1)) produced in Production Example 3 was extracted as follows and the components of the particles were analyzed.

(Extraction of chitosan)

First, 500 μL of the dispersion of the particles was put into an ultrafilter (Vivaspin 500, 50 kDa pore, Sartorius AG) and centrifuged at 8000 × g for 30 minutes. Thereby, water-soluble components were removed. Further, 400 μL of water was added thereto and the same operations were performed, which was repeated three times in total. The resulting concentrate of the colorant-encapsulating chitosan particles was suspended to a capacity of 500 μL.

Then, 20 μL of this suspension was combined with 980 μL of 6 M HCl and hydrolyzed at 100°C for 24 hours. To 20 μL of this hydrolysate was added 180 μL of 0.6 M NaOH, followed by LC-MS analysis. Thereby, chitosan contained in the colorant-encapsulating chitosan particles was detected as glucosamine. Using KiOnutrime-CsG as a standard, a calibration curve was drawn for quantification.

(LC-MS analysis (chitosan))

The structure of LC-MS equipment used includes a solvent delivery unit LC pump Nexera LC-30AD (Shimadzu Corp.), and a mass spectrometer QTRAP 6500 system (AB Sciex Pte. Ltd.) provided with an ESI ion source. The mass spectrometry was performed in the MRM mode (precursor ion m/z 180, product ion m/z 60) in the positive ion detection mode.

(LC conditions)

Column: Scherzo SS-C18 (Imtakt Corp., 150 × 2.0 mm I.D., 3 μm)
Column temperature: 40°C
Flow rate: 0.4 mL/min
Gradient (liquid B (vol%)): 0% (0 to 2 min) to 100% (7 to 10 min)
Liquid A: 0.1% aqueous formic acid solution
Liquid B: 100 mM aqueous ammonium formate solution/acetonitrile (30/70 (vol/vol))
Amount injected: 2 μL

(Extraction of oleic acid)

The dispersion of the particles was combined with the equivalent amount of acetone, followed by centrifugation (15000 × g, 3 min). Thereby, colorant-encapsulating chitosan particles were precipitated.
The precipitate of the colorant-encapsulating chitosan particles in an amount corresponding to 1000 μL of the dispersion of the particles was suspended in 1000 μL of acetone. A 100-μL portion of this suspension was suspended in 4.9 mL of acetone and sonicated for one minute.
To 50 μL of this sonicated solution was added 450 μL of 0.5 M KOH 90% methanol, followed by saponification reaction at 60°C for 30 minutes. This reaction liquid was combined with 200 μL of 2 M HCl. The amount was then adjusted to 1 mL with 90% methanol. The mixture was diluted with 90% methanol to an appropriate concentration, followed by LC-MS analysis. Thereby, oleic acid contained in the colorant-encapsulating chitosan particles was quantified. In this quantification of oleic acid, a calibration curve was drawn with high oleic safflower oil as a standard, followed by quantification.

(LC-MS analysis (oleic acid))

The structure of LC-MS equipment used includes a solvent delivery unit LC pump Nexera LC-30AD (Shimadzu Corp.), and a mass spectrometer QTRAP 6500 system (AB Sciex Pte. Ltd.) provided with an ESI ion source. The mass spectrometry was performed in the negative ion detection mode at m/z 281.

(LC conditions)

Column: Triart C18 (YMC Co., Ltd., 150 × 2.0 mm I.D., 1.9 μm)
Column temperature: 40°C
Flow rate: 0.2 mL/min
Gradient (Liquid B (vol%)): 50% to 100% (10 to 15 min)
Liquid A: 10 mM aqueous ammonium acetate solution
Liquid B: acetonitrile
Amount injected: 2 μL

The result demonstrates that the colorant-encapsulating chitosan particles (Particles (P3-1)) in the solution produced in Production Example 3 contained 2.4 mg/mL of chitosan and 5.5 mg/mL of high oleic safflower oil. The weight ratio of the oily component to the cationic polymer (oily component/cationic polymer) in Particles (P3-1) was 2.3. Based on the amount of high oleic safflower oil contained, the amount of the colorant contained in the core-shell particles in the dispersion was calculated to be 0.165 mg/mL.

<Example 5>

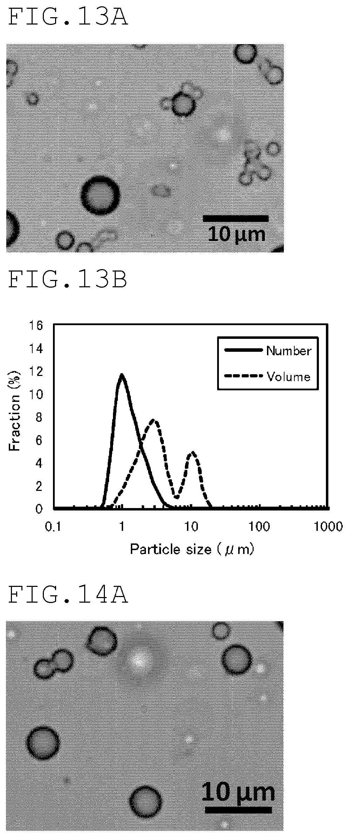

The dispersion of Particles (P3-1) and the dispersion of Particles (P3-2) obtained in Production Example 3 were observed under a digital microscope (Keyence Corp.). Each observation showed particles encapsulating the colorant; in other words, colorant-encapsulating chitosan particles (core-shell particles containing the colorant in the core) formed from the edible materials alone were obtained (FIG. 13A). Particles (P3-1) and (P3-2) were core-shell particles each including the core containing the oily component and the colorant as well as the shell encapsulating the core. FIG. 13A is a micrograph of the dispersion of Particles (P3-1). The particles were analyzed using the laser diffraction particle size distribution analyzer. FIG. 13B includes graphs of the number-based particle size distribution and volume-based particle size distribution of Particles (P3-1) (solid line: number-based, dotted line: volume-based). The mean number diameter of Particles (P3-1) was 1.2 $\mu$m (solid line in FIG. 13B) and the mean volume diameter thereof was 3.3 $\mu$m (dotted line in FIG. 13B). The ratio of the mean number diameter to the mean volume diameter (mean number diameter/mean volume diameter) was 0.35.

<Example 6>

A 45-mL portion of the dispersion of the colorant-encapsulating chitosan particles (P3-1) constructed using KiOnutrime-CsG in Production Example 3 was put into a 50-mL centrifuge tube and centrifuged using a swinging rotor at 2330 $\times$ g for 20 minutes. After the centrifugation, the solution was separated into three layers, i.e., a precipitate, an intermediate layer, and an upper layer, and 40 mL of the solution at the intermediate layer was collected.

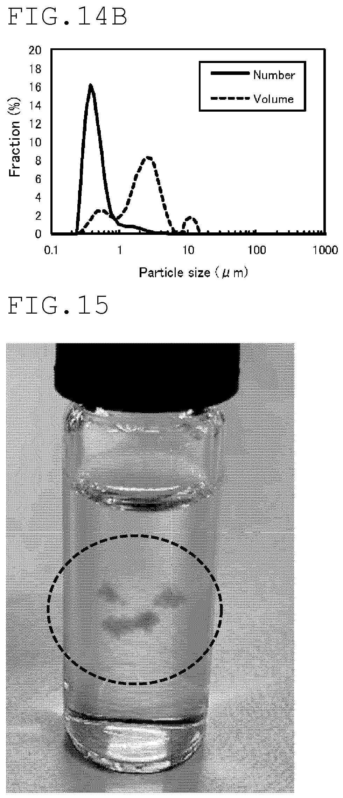

The solution at the intermediate layer was observed under a digital microscope (Keyence Corp.). FIG. 14A shows a micrograph. In the solution at the intermediate layer, chitosan particles encapsulating the colorant were observed; in other words, colorant-encapsulating chitosan particles (core-shell particles containing the colorant in the core) formed from the edible materials alone was obtained (FIG. 14A). The particles were analyzed using the laser diffraction particle size distribution analyzer. FIG. 14B shows the number-based particle size distribution and the volume-based particle size distribution (solid line: number-based, dotted line: volume-based). The mean number diameter of the colorant-encapsulating chitosan particles contained in the solution at the intermediate layer was 0.4 $\mu$m (solid line in FIG. 14B) and the mean volume diameter thereof was 1.9 $\mu$m (dotted line in FIG. 14B). The centrifugation removed large particles. The appearance of the solution at the intermediate layer was orange and uniform. The solution at the intermediate layer contained the colorant-encapsulating chitosan particles and water, with the particles being dispersed in water. Based on the density of water contained in the solution at the intermediate layer, the density of the colorant-encapsulating chitosan particles contained in the solution at the intermediate layer can be regarded as 1.00 g/cm$^3$.

A 10-$\mu$L portion of this solution at the intermediate layer containing the colorant-encapsulating chitosan particles dispersed therein was injected into 3.5 mL of a 1.2 vol% aqueous glycerol solution so as to experimentally form a pattern using the colorant-encapsulating chitosan particles. The concentration of the colorant-encapsulating chitosan particles in this solution at the intermediate layer was 1 wt%. The solution at the intermediate layer had a viscosity of 1.5 mPa·s and a density of 1.00 g/cm$^3$. The ratio of the density of the solution at the intermediate layer to the density of the 1.2 vol% aqueous glycerol solution, 1.00 g/cm$^3$, was 1.

The result demonstrates that the solution at the intermediate layer did not flow, float, or sink in the aqueous glycerol solution and successfully formed a pattern of the colorant-encapsulating chitosan particles. FIG. 15 is a photograph of the pattern formed in the 1.2 vol% aqueous glycerol solution using the solution at the intermediate layer containing the colorant-encapsulating chitosan particles. This experiment demonstrates that a pattern can be drawn in a liquid using the colorant composition in which the core-shell particles encapsulating the colorant is dispersed in a liquid.

<Example 7>

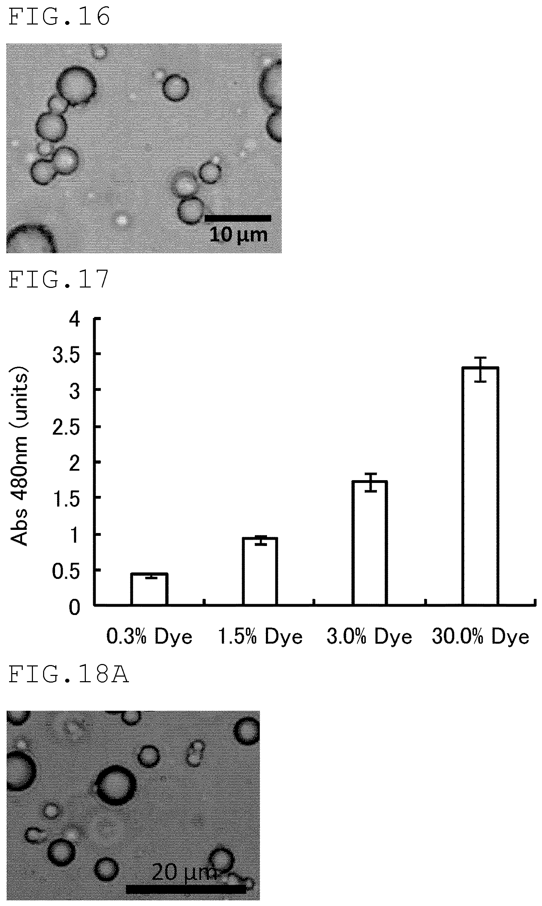

The emulsifier condition in Production Example 3 was changed from the presence of 1 g decaglycerol laurate L-7D (hereinafter, referred to as L-7D) to the presence of 1 g decaglycerol myristate M-7D (Mitsubishi Chemical Corp.) or to the absence of an emulsifier. Except for this, particles were produced using KiOnutrime-CsG in the method as in Production Example 3. This resultantly provided a dispersion of colorant-encapsulating chitosan particles (core-shell particles containing the colorant in the core) having a size equal to that in the case of using L-7D. The colorant-encapsulating chitosan particles produced were core-shell particles each including the core containing the oily component and the colorant as well as the shell encapsulating the core. FIG. 16 is a micrograph (digital microscope, Keyence Corp.) of the dispersion of the particles obtained using decaglycerol myristate M-7D as an emulsifier. The particles were analyzed using the laser diffraction particle size distribution analyzer, which showed that the particles obtained using M-7D had a mean number diameter of 1.5 $\mu$m and a mean volume diameter of 2.7 $\mu$m. The ratio of the mean number diameter to the mean volume diameter was 0.55. The particles obtained without an emulsifier had a mean number diameter of 1.5 $\mu$m and a mean volume diameter of 9.5 $\mu$m. The ratio of the mean number diameter to the mean volume diameter was calculated to be 0.15. These results demonstrate that core-shell particles containing the colorant in the core can be formed even without using an emulsifier. However, the results also suggest that the addition of a polyglycerol fatty acid ester is preferred to achieve more uniform core-shell particles encapsulating the colorant.

<Example 8>

Except that the amount of the colorant added to fat or oil in Production Example 3 was changed, particles were constructed using KiOnutrime-CsG in the method as in Production Example 3. Specifically, the ratio of mixing (i) high oleic safflower oil (Summit Oil Mill) and (ii) Nichino Color PO-5 (capsicum oleoresin 30%, tocopherol extract 2%, and food material 68%, orange colorant available from Nichino Kagaku Kogyo Co., Ltd.) was changed to: using 2 mL of the substance (ii) (Condition 1, Nichino Color PO-5 alone); using 1.8 mL of the substance (i) and 0.2 mL of the substance (ii) (Condition 2); using 1.9 mL of the substance (i) and 0.1 mL of the substance (ii) (Condition 3); or using 1.98 mL of the substance (i) and 0.02 mL of the substance (ii) (Condition 4) for preparation of a colorant solution (n = 3 in each case). Except for this, a dispersion of particles was produced in the method as in Production Example 3. The concentration of the capsicum oleoresin in the colorant solution was 30 wt% (Condition 1), 3 wt% (Condition 2), 1.5 wt% (Condition 3), and 0.3 wt% (Condition 4).

This successfully resulted in producing a dispersion of colorant-encapsulating chitosan particles (core-shell particles encapsulating the colorant) by the method of any of Condition 1 to Condition 4. The colorant-encapsulating chitosan particles produced were core-shell particles each including the core containing the oily component and the colorant as well as the shell encapsulating the core. The appearance of each of the dispersions of the colorant-encapsulating chitosan particles produced was uniform and was orange to red depending on the amount of the colorant added. Immediately after the construction, the dispersion was left at 25°C for one hour, but none of sinking of the particles, floating of the particles on the surface of the dispersion, and separation of the solution and the particles were observed. The mean number diameters of the colorant-encapsulating chitosan particles obtained by the methods of Condition 1 to Condition 4 were 1.0 μm (Condition 1), 1.3 μm (Condition 2), 1.3 μm (Condition 3), and 1.3 μm (Condition 4) and the mean volume diameters thereof were 5.2 μm (Condition 1), 6.0 μm (Condition 2), 3.9 μm (Condition 3), and 5.5 μm (Condition 4).

The absorption spectra of the resulting dispersions of the particles were analyzed using a spectrophotometer UV-1850 (Shimadzu Corp.), and the absorbances at the maximum absorption wavelength (480 nm) were determined. The results are shown in FIG. 17 (0.3% Dye: Condition 4, 1.5% Dye: Condition 3, 3.0% Dye: Condition 2, 30% Dye: Condition 1). The results shown in FIG. 17 are means ($\pm$ standard deviation) with n = 3. The absorption spectra of the resulting dispersions of the particles were analyzed, which showed that the absorbance at 480 nm increased depending on the concentration of the colorant added (FIG. 17). These results demonstrate that the color intensity of the core-shell particles can be controlled in accordance with the amount of the colorant added.

<Example 9>

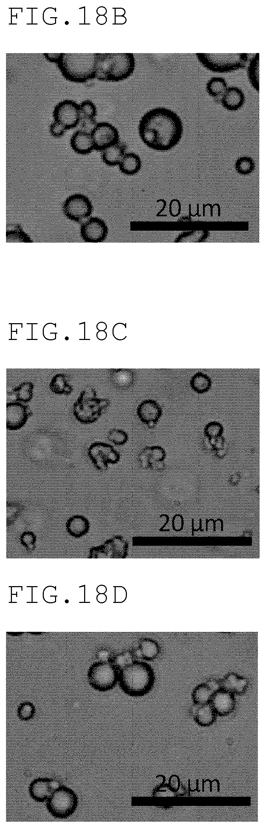

The type of the colorant added to fat or oil in Production Example 3 was changed. Except for this, particles were constructed using KiOnutrime-CsG in the method as in Production Example 3. Specifically, instead of Nichino Color PO-5, Nichino Color G-AO-3 (chlorophyll 30% and food material 70%, green colorant available from Nichino Kagaku Kogyo Co., Ltd.), KC Red BO-5 (red beet colorant 30%, glycerol fatty acid ester 23%, propylene glycol 5%, sodium L-ascorbate 1%, and food material 41%, red colorant available from Kobe Chemical Co., Ltd.), KC Red KO-5 (gardenia color 7.5%, glycerol fatty acid ester 15%, sodium L-ascorbate 3%, ethyl alcohol 2.5%, mixed tocopherol 1.5%, and food material 70.5%, red colorant available from Kobe Chemical Co., Ltd.), or KC Red MO-52 (monascus colorant 30%, glycerol fatty acid ester 25%, mixed tocopherol 2%, and food material 43%, red colorant available from Kobe Chemical Co., Ltd.) was used to produce particles. FIG. 18A, FIG. 18B, FIG. 18C, and FIG. 18D are micrographs of the dispersions of the particles obtained using the above colorants (FIG. 18A: Nichino Color G-AO-3, FIG. 18B: KC Red BO-5, FIG. 18C: KC Red KO-5, FIG. 18D: KC Red MO-52). The resulting colorant-encapsulating chitosan particles were core-shell particles each including the core containing the oily component and the colorant and the shell encapsulating the core. Using any of the colorants successfully led to production of colorant-encapsulating chitosan particles (core-shell particles containing the colorant in the core). The appearance of each of the resulting dispersions of the colorant-encapsulating chitosan particles was uniform. Immediately after the construction, the dispersion was left at 25°C for one hour, but none of sinking of the particles, floating of the particles on the surface of the dispersion, and separation of the solution and the particles were observed.

Every solution (dispersion of the colorant-encapsulating chitosan particles) after the particles construction reaction was colored (red or green in visual observation). KC Red series colorants are colorants prepared by dispersing a water-soluble colorant in edible oil using an emulsifier, so that concern arose over the potential for a failure in holding the colorant in the particles and for leakage of the colorant from the particles to the aqueous solution during construction. Thus, in order to confirm the encapsulation of the colorant component in the particles, the particles were subjected to separation analysis using an ultrafiltration membrane. In the case where the colorant component was encapsulated in the particles, a large amount of the colorant was expected to be present in the high-molecular-weight fraction. In the case where the colorant component leaked to the aqueous solution, the colorant was expected to be present in the low-molecular-weight fraction.

First, a 4-mL portion of each solution after the particles construction reaction was centrifuged at 10000 $\times$ g for five

minutes so that the solution was separated into an oily phase and an aqueous phase containing the particles, and the aqueous phase was collected. A 500-μL portion of this aqueous phase was fed into a centrifuge concentration tube Vivaspin 500 (molecular weight cut off (MWCO) 50000, Sartorius AG) and centrifuged at 10000 × g. The flow-through filtrate was collected and another portion of the aqueous phase was added to the tube, followed by centrifugation. This process was repeated until the total amount of the aqueous phase reached 1.5 mL, whereby the flow-through filtrate and 500 μL of the aqueous phase concentrate were obtained.

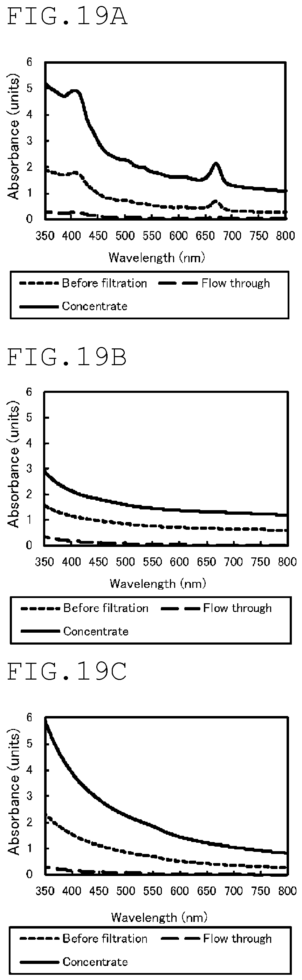

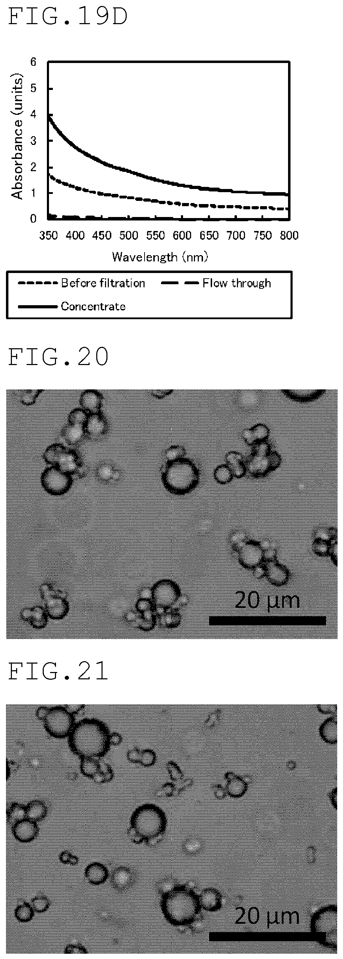

The absorption spectra of the resulting solutions were analyzed using a spectrophotometer UV-1850 (Shimadzu Corp.). FIG. 19A, FIG. 19B, FIG. 19C, and FIG. 19D are graphs of the absorption spectra of the dispersions of the particles produced using the colorants (before ultrafiltration) and products obtained by ultrafiltration thereof, i.e., the flow-through filtrates and the aqueous phase concentrates. The short-dashed line represents the absorption spectrum of the dispersion of the particles before ultrafiltration, the long-dashed line represents the absorption spectrum of the flow-through filtrate, and the solid line represents the absorption spectrum of the aqueous phase concentrate. FIG. 19A corresponds to the particles solution of Nichino Color G-AO-3, FIG. 19B corresponds to the particles solution of KC Red BO-5, FIG. 19C corresponds to the particles solution of KC Red KO-5, and FIG. 19D corresponds to the particles solution of KC Red MO-52.

With any colorant, absorption was hardly observed for the flow-through filtrate. The aqueous phase concentrate exhibited absorption several times higher than that of the unprocessed solution (dispersion of particles before ultrafiltration), which confirmed that the colorant was encapsulated in the particles. These results suggest that a water-soluble colorant, when dispersed in the oily component in advance, also be encapsulated in the particles and merely slightly leak to the aqueous solution containing the particles dispersed therein.

<Example 10>

The colorant (Nichino Color PO-5) added to fat or oil in Production Example 3 was changed to KC Blue KO-10 (gardenia blue colorant 40%, glycerol fatty acid ester 15%, mixed tocopherol 1%, and food material 44%, blue colorant available from Kobe Chemical Co., Ltd.). Except for this, particles were produced using KiOnutrime-CsG by the same method as in Production Example 3. The concentration of gardenia blue colorant in the colorant solution after mixing was 4%.

FIG. 20 is a micrograph of the resulting dispersion of the particles. The resulting particles were core-shell particles each including the core containing the oily component and the colorant as well as the shell encapsulating the core. Using the blue colorant also successfully led to construction of colorant-encapsulating chitosan particles (core-shell particles containing the colorant in the core) (FIG. 20) as in the cases of using other colorants. The particles were analyzed using the laser diffraction particle size distribution analyzer, which showed that the mean number diameter was 1.5 μm and the mean volume diameter was 3.8 μm. These results revealed that the present method can provide core-shell particles encapsulating the blue colorant.

<Example 11>

The chitosan and colorant solution used in Production Example 3 were respectively changed to crustacean-derived LL-40 (Yaizu Suisankagaku Industry Co., Ltd.) and 2 mL of oleic acid containing 0.01 g of β-carotene dispersed therein. Except for this, colorant-encapsulating chitosan particles were produced by the same method as in Production Example 3. The appearance of the resulting dispersion of the colorant-encapsulating chitosan particles was yellow and uniform. Immediately after the construction, the dispersion was left at 25°C for one hour, but none of sinking of the particles, floating of the particles on the surface of the dispersion, and separation of the solution and the particles were observed.

FIG. 21 is a micrograph of the resulting dispersion of the particles. The result shows the construction of colorant-encapsulating chitosan particles (core-shell particles containing the colorant in the core) (FIG. 21) as in the case of using KiOnutrime-CsG. The colorant-encapsulating chitosan particles produced were core-shell particles each including the core containing the oily component and the colorant as well as the shell encapsulating the core. The particles were analyzed using the laser diffraction particle size distribution analyzer, which showed that the mean number diameter was 1.6 μm and the mean volume diameter was 2.3 μm. These results demonstrate that a different type of chitosan in the present method can lead to similar particles.

<Example 12>

Colorant-encapsulating chitosan particles were produced as in Production Example 1 except that the weight ratio of the oily component (O) and chitosan (C) (oily component/chitosan (O/C)) was changed within a range of 0.1 to 5.6. Specifically, without changing the amount of water, particles were constructed at an amount ratio of 2 mL oleic acid/0.32 g chitosan (O/C = 5.6), 2 mL oleic acid/0.8 g chitosan (O/C = 2.2), 2 mL oleic acid/1.6 g chitosan (O/C = 1.1), 1 mL oleic acid/1.6 g chitosan (O/C = 0.6), and 0.2 mL oleic acid/1.6 g chitosan (O/C = 0.1). The colorant used was Sudan III (CAS RN. 85-86-9, Tokyo Chemical Industry Co., Ltd.). The colorant concentration in oleic acid used for each production of particles was 0.005 g/mL.

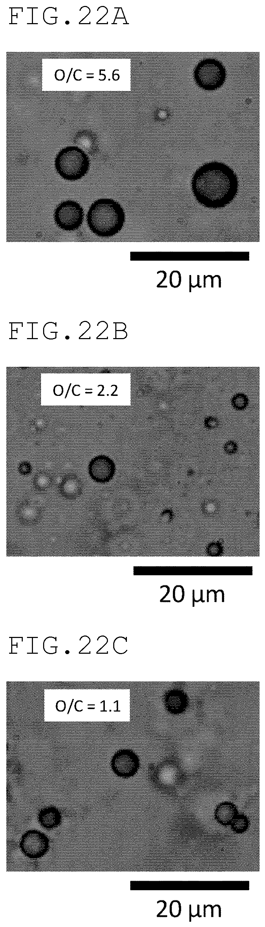

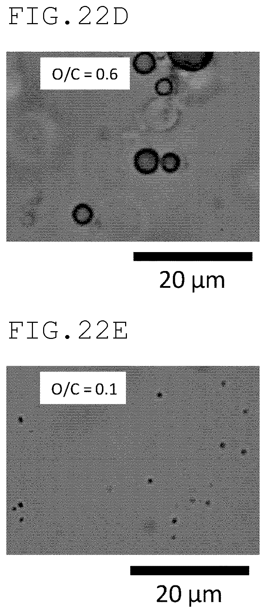

The results demonstrate that micro-sized core-shell particles encapsulating the colorant were successfully produced under the conditions where the weight ratio of the oily component and chitosan (O/C) was 0.1 to 5.6. The particles produced were core-shell particles each including the core containing the oily component and the colorant as well as the shell encapsulating the core. FIG. 22A, FIG. 22B, FIG. 22C, FIG. 22D, and FIG. 22E are micrographs of the resulting dispersions of the particles (FIG. 22A: O/C = 5.6, FIG. 22B: O/C = 2.2, FIG. 22C: O/C = 1.1, FIG. 22D: O/C = 0.6, FIG. 22E: O/C = 0.1). Particularly, in the case where the weight ratio of the oily component and chitosan (O/C) was 0.1, particles having a diameter of about 100 nm were formed (FIG. 22E).

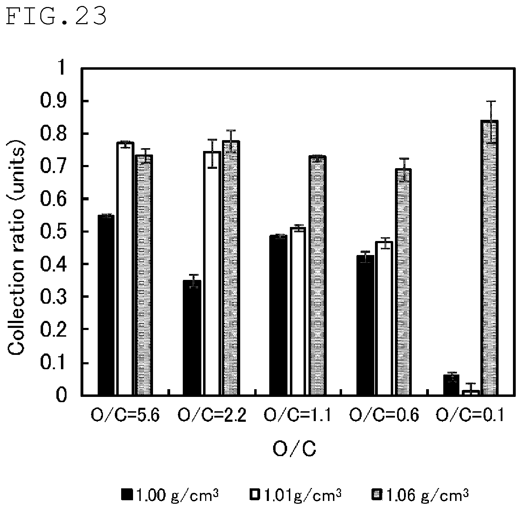

The densities of the particles produced under the respective conditions were evaluated by centrifugation in aqueous solutions of various densities. Specifically, each particles solution obtained was diluted with water such that the chitosan content was 1 g/L. The particles were then suspended in an aqueous glycerol solution prepared to have a density of 1.00 g/cm$^3$, 1.01 g/cm$^3$, or 1.06 g/cm$^3$ such that the final chitosan concentration was 0.5 g/L. The absorption spectra of the resulting suspensions were determined using a spectrophotometer. The maximum absorption wavelengths ($\lambda$max) of these suspensions were 530 nm. Each suspension was centrifuged at 10000 × g for 5 min to collect the supernatant. The absorbance of the supernatant at 530 nm was determined. With the absorbance at 530 nm of the individual solution before centrifugation taken as 1, the relative value of the absorbance at 530 nm of the supernatant (absorbance of supernatant/absorbance of solution before centrifugation) was defined as the collection ratio. This collection ratio was used to relatively evaluate the concentration of the particles in the supernatant. The higher the concentration of the particles in the solution is, the higher the absorbance at 530 nm is. This therefore means that a higher collection ratio represents a larger number of the particles in the supernatant. In other words, the higher the collection ratio is, the more the particles having a density lower than that of the aqueous glycerol solution is. FIG. 23 shows the density evaluation results (collection ratios) of the particles produced at a variety of oily component/chitosan weight ratio (O/C). The results shown in FIG. 23 are means ($\pm$ standard deviation) with n = 4. The black bars represent the collection ratios in an aqueous solution having a density of 1.00 g/cm$^3$, the white bars represent the collection ratios in an aqueous solution having a density of 1.01 g/cm$^3$, and gray bars represent the collection ratios in an aqueous solution having a density of 1.06 g/cm$^3$.

The results show that at an oily component/chitosan weight ratio (O/C) of 5.6, half or more of the particles in the supernatant were collected even in the aqueous solution having a density of 1.00 g/cm$^3$. This suggests that half or more of the particles constructed under this condition be particles lighter than water (O/C = 5.6 in FIG. 23). Eighty percent or more of the particles were collected in the aqueous solution having a density of 1.01 g/cm$^3$, which suggests that most of the particles produced at an oily component/chitosan weight ratio (O/C) of 5.6 have a density of 1.01 g/cm$^3$ or lower. Similarly, most of the particles produced at an oily component/chitosan weight ratio (O/C) of 2.2 had a density of 1.01 g/cm$^3$ or lower. At an oily component/chitosan weight ratio (O/C) of 1.1 or 0.6, the collection ratio was about 50% in the aqueous solution having a density of 1.01 g/cm$^3$. This demonstrates that particles constructed are heavier on average than those produced at an O/C ratio of 5.6 or 2.2. At an oily component/chitosan weight ratio (O/C) of 0.1, particles were hardly collected except for the aqueous solution having a density of 1.06 g/cm$^3$. This demonstrates that a small amount of the oily component leads to construction of heavy particles. The results demonstrate that the density of the resulting particles can be controlled by the amount ratio of the cationic polymer and the oily component in production.

<Example 13>

Colorant-encapsulating particles were produced as in Production Example 1 except that the oily component/chitosan weight ratio (O/C) was changed to 5.6 or 2.2 (n = 3 in each case). Specifically, without changing the amount of water, particles were constructed at an amount ratio of 2 mL oleic acid/0.32 g chitosan (O/C = 5.6) or 0.8 g chitosan (O/C = 2.2). The colorant used was Sudan III (CAS RN. 85-86-9, Tokyo Chemical Industry Co., Ltd.). The colorant concentration in oleic acid used for each construction of particles was 0.01 g/mL.

The densities of the particles produced under the respective conditions were evaluated by centrifugation in aqueous solutions of various densities. In Example 13, the density of the particles was determined using water and an aqueous whisky solution. Specifically, each particles solution obtained was diluted with water such that the chitosan content was 1 g/L. Separately, an aqueous solution containing 20 to 80 vol% of whisky (Suntory Kakubin) was prepared such that the density was 0.96 to 0.99 g/cm$^3$. The particles were then suspended in water (density 1.00 g/cm$^3$) or the aqueous whisky solution such that the final chitosan concentration was 0.2 g/L. The suspensions were centrifuged at 10000 × g for 5 min to collect the supernatant. The absorbance of the supernatant at 530 nm was determined. With the absorbance at 530 nm of the individual solution before centrifugation taken as 1, the relative value of the absorbance at 530 nm of the supernatant collected (absorbance of supernatant/absorbance of solution before centrifugation) was defined as the collection ratio and the concentration of the particles in the supernatant was relatively evaluated. The densities of whisky at respective concentrations were measured using a density meter DMA 4500 M (Anton Paar GmbH).

The densities of the aqueous whisky solutions at respective concentrations were 0.99 g/cm$^3$ at 20 vol%, 0.98 g/cm$^3$ at 40 vol%, 0.97 g/cm$^3$ at 60 vol%, and 0.96 g/cm$^3$ at 80 vol%. The density of the undiluted whisky was 0.95 g/cm$^3$.

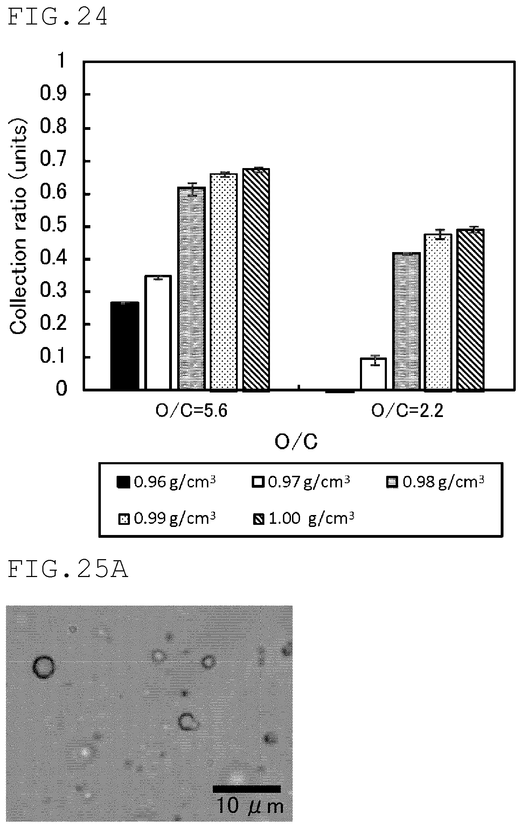

FIG. 24 shows the density evaluation results (collection ratios) of the particles. The results shown in FIG. 24 are means ($\pm$ standard deviation) with n = 3.

The results show that at an oily component/chitosan weight ratio (O/C) of 5.6, the particles were collected in the supernatant even in the aqueous solution having a density of 0.96 g/cm$^3$. This demonstrates that the particles produced under this condition included particles lighter than the 80 vol% aqueous whisky solution (FIG. 24). In contrast, the results show that the particles produced at an oily component/chitosan weight ratio (O/C) of 2.2 were not collected in the aqueous solution having a density of 0.96 g/cm$^3$. This revealed that the particles tended to be heavier than the particles at an oily component/chitosan weight ratio (O/C) of 5.6 and included a large number of particles lighter than water. The results demonstrate that the density of the resulting particles can be controlled by the amount ratio of the cationic polymer and the oily component in production, leading to construction of particles that can be used for drawing in a drink such as whisky.

<Example 14>

Dispersions of the particles produced in Production Example 1 and of the particles produced using KiOnutrime-CsG or Chitosan LL-40 in Production Example 3 (aqueous solutions containing the respective particles dispersed therein) were prepared as colorant compositions, and the densities and viscosities thereof were determined.

The density was determined using a density meter DMA 4500 M (Anton Paar GmbH).

As a result, the colorant composition containing Particles (P1) in Production Example 1 had a density of 1.00 g/cm$^3$ and a viscosity of 2.8 mPa·s. The colorant composition containing Particles (P3-1) formed from KiOnutrime-CsG had a density of 1.00 g/cm$^3$ and a viscosity of 1.9 mPa·s. The colorant composition containing Particles (P3-2) formed from Chitosan LL-40 had a density of 1.00 g/cm$^3$ and a viscosity of 2.4 mPa·s.

Membrane-concentrating the dispersions of the particles obtained in the aforementioned production examples and the examples enables changing the solvent to another solvent different from water.

<Example 15>

In the process of Production Example 3, 3.2 g of KiOnutrime-CsG was used as chitosan and this chitosan was dissolved in the acid solution. The pH was adjusted with NaOH and the solution was centrifuged at 10000 $\times$ g for five minutes, whereby insoluble molecules were removed. Except for this, colorant-encapsulating chitosan particles were produced in the same manner as in Production Example 3.

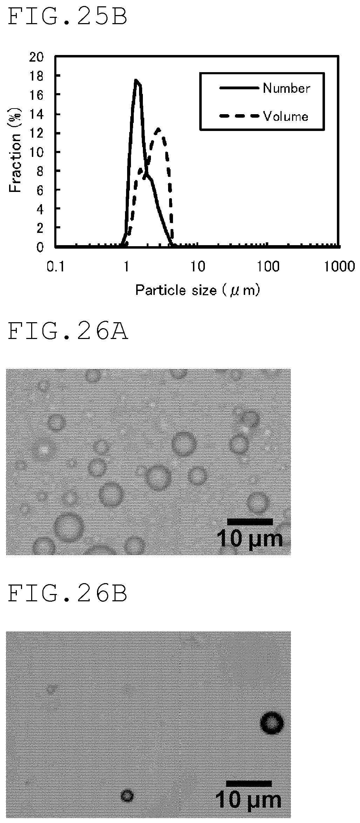

The resulting dispersion of the particles was observed under a digital microscope (Keyence Corp.). FIG. 25A shows a micrograph. Particles encapsulating the colorant were observed; in other words, the colorant-encapsulating chitosan particles (core-shell particles containing the colorant in the core) formed from the edible materials alone were obtained (FIG. 25A). The resulting particles were core-shell particles each including the core containing the oily component and the colorant as well as the shell encapsulating the core. The particles were analyzed using the laser diffraction particle size distribution analyzer. FIG. 25B shows the number-based particle size distribution and volume-based particle size distribution of the particles (solid line: number-based, dotted line: volume-based). The colorant-encapsulating chitosan particles had a mean number diameter of 1.6 $\mu$m (solid line in FIG. 25B) and a mean volume diameter of 2.8 $\mu$m (dotted line in FIG. 25B). Increasing the amount of KiOnutrime-CsG successfully led to uniform particles.

<Example 16>

Except that the type and amount of the fat or oil added in Production Example 3 were changed, particles were constructed using Chitosan LL-40 in the method as in Production Example 3. Specifically, particles were produced in the method as in Production Example 3 except that a colorant solution was prepared by mixing 4.8 mL of linolenic acid (density 0.914 g/mL, CAS RN: 463-40-1) and 0.2 mL of Nichino Color PO-5 (Nichino Kagaku Kogyo Co., Ltd.) and was added dropwise at a rate of 0.5 mL/min. The resulting particles containing linolenic acid were analyzed using the laser diffraction particle size distribution analyzer.

Also, particles were produced in the method as in Production Example 3 except that a colorant solution was prepared by mixing 0.8 mL of palmitic acid (density 0.854 g/mL, CAS RN: 463-40-1) and 0.2 mL of Nichino Color PO-5 (Nichino Kagaku Kogyo Co., Ltd.) under heating at 70°C and the entire amount of the solution was put at one time into a reaction liquid heated to 70°C. The resulting particles containing palmitic acid were analyzed using the laser diffraction particle size distribution analyzer.

As a result, the particles constructed using linolenic acid or palmitic acid had a mean number diameter of respectively 0.5 $\mu$m and 4.1 $\mu$m and a mean volume diameter of respectively 0.9 $\mu$m and 41 $\mu$m. FIG. 26A is a micrograph of the dispersion of the colorant-encapsulating chitosan particles produced using linolenic acid and FIG. 26B is a micrograph of the dispersion of the colorant-encapsulating chitosan particles produced using palmitic acid. The particles produced were core-shell particles each including the core containing the oily component and the colorant as well as the shell encapsulating the core. Using linolenic acid or palmitic acid successfully led to production of colorant-encapsulating chitosan particles (core-shell particles encapsulating the colorant) (FIG. 26A and FIG. 26B),

<Production Example 4>

To 159 g of distilled water were added 1.6 mL of glacial acetic acid (Kozakai Pharmaceutical Co., Ltd.) and 1.6 g of chitosan (KiOnutrime-CsG (Sceti K.K.). The contents were stirred under heating to 60°C, so that chitosan was dissolved. After chitosan was dissolved to form a solution, about 6 mL of a 2N aqueous NaOH solution was added dropwise and the pH of the solution was adjusted to fall within a range of 4.7 to 4.8. The solution was then centrifuged at 5000 × g for five minutes, whereby an aqueous chitosan solution with impurities removed therefrom was obtained. Separately, to 109 g of distilled water were added dropwise 1.6 mL of glacial acetic acid (Kozakai Pharmaceutical Co., Ltd.) as well as about 6 mL of a 2N aqueous NaOH solution and the pH of the solution was adjusted to fall within a range of 4.7 to 4.8, whereby an aqueous solution was prepared. To this aqueous solution was added 1 g of decaglycerol laurate L-7D (Mitsubishi Chemical Corp.) dissolved in 50 g of distilled water, whereby an aqueous emulsifier solution was obtained. Further, 1.8 mL of high oleic safflower oil (Summit Oil Mill, density 0.91) was combined with 0.2 mL of Nichino Color PO-5 (capsicum oleoresin 30%, tocopherol extract 2%, and food material 68%, Nichino Kagaku Kogyo Co., Ltd.). The contents were stirred, whereby a colorant solution was obtained.

Then, 165 mL of the aqueous emulsifier solution was moved to a stirring vessel and stirred at 200 rpm using a general-purpose agitator BL600 (Shinto Scientific Co., Ltd.) while heated to 60°C in a water bath (Thermal Robot TR-2, As One Corp.). To the heated and stirred aqueous emulsifier solution was added dropwise 2 mL of the colorant solution at a rate of 0.2 mL/min using a syringe pump (SPS-2, As One Corp.). The resulting solution mixture, 167 mL, was processed at 12000 rpm for five minutes using a homogenizer (digital ULTRA-TURRAX, IKA, equipped with S25N-18G dispersion tool), so that the solution mixture was emulsified. The emulsified solution was stirred at 200 rpm in a water bath while heated to 60°C. Thereto was added 165 mL of the aqueous chitosan solution and the mixture was stirred for one hour. Then, 100 mL of the solution was sampled. The rest of the solution was combined with 96 mL of aqueous sodium tripolyphosphate solution (0.52 g/L, Mitejima Chemical Co., Ltd.) as a cross-linker, which was dispensed into two 50-mL syringes and added dropwise to the solution simultaneously in two directions using a syringe pump (SPS-2, As One Corp.) at a rate of 4.8 mL/min. After the dropwise addition, the mixture was placed in a water bath, and stirred at 200 rpm for one hour while heated to 60°C. Thereby, a dispersion of colorant-encapsulating chitosan particles was obtained.

This result demonstrates that forming oil drops before adding the aqueous chitosan solution can also lead to constructing core-shell particles encapsulating the colorant. The mean number diameter thereof was 1.9 $\mu$m and the mean volume diameter thereof was 5.5 $\mu$m. The surface charge thereof was 8.8 mV and the density thereof was 1.00 g/cm$^3$. The surface charge was determined using a zeta potential analyzer (ZEECOM ZC-3000N, Microtec Co., Ltd.). The particles produced were core-shell particles each including the core containing the oily component and the colorant as well as the shell encapsulating the core. The appearance of the resulting dispersion of the colorant-encapsulating chitosan particles was red and uniform. Immediately after the construction, the dispersion was left at 25°C for one hour, but none of sinking of the particles, floating of the particles on the surface of the dispersion, and separation of the solution and the particles were

observed.

<Example 17>

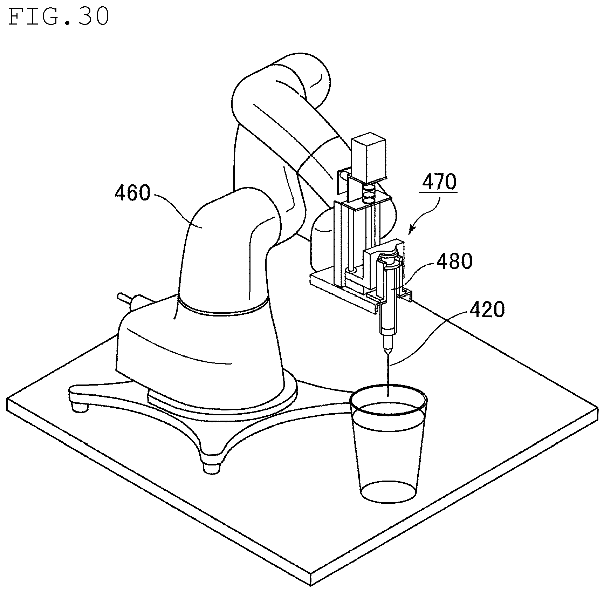

In order to form a pattern in a liquid using as ink a liquid containing the constructed colorant-encapsulating chitosan particles dispersed therein, the following device (Progress Technologies Inc.) was used. FIG. 30 is a schematic perspective view of a device for forming a pattern in a liquid used in Example 17.

As shown in FIG. 30, a human collaborative robot 460 (human collaborative robot COBOTTA, Denso Wave Inc.) is equipped at its arm end with a syringe push system 470 including a stepping motor and a lead screw. This syringe push system 470 can push the contents such as liquid at various rates according to the external input. The syringe push system 470 includes, as a syringe 480, a plunger MS-GLLX20 (capacity: 10 mL, available from Ito Corp.) equipped with N722 pst-3 (inner diameter: 0.41 mm) as a nozzle 420. The maximum discharge flow amount (maximum discharge rate) was from 0 mL/s to 200 mL/s. The maximum nozzle moving rate was 150 mm/s and the minimum nozzle moving rate was 0.15 mm/s. With the nozzle moving rate being defined as $\alpha$ mm/s, the nozzle movement acceleration was at most $\alpha$ mm/s$^2$ and at least 0.000001 mm/s$^2$. This system successfully discharged the liquid containing the colorant-encapsulating chitosan particles dispersed therein through the nozzle 420.

Using as ink a liquid containing the colorant-encapsulating chitosan particles dispersed therein obtained using KiOnutrime-CsG in Production Example 4, a star pattern was drawn using the above system.

The liquid to serve as a drawing target was prepared by suspending 1.0 wt% guar gum (VIDOCREM A, available from Unitec Foods Co., Ltd.) and 5 wt% glycerol in water. This drawing target liquid had a viscosity of 65 mPa·s and a density of 1.01 g/mL. The viscosity (25°C) of the drawing target liquid was measured using a tuning fork vibro viscometer SV-10 (available from A&D Co., Ltd.). The density was measured using a density meter DMA 4500 M (Anton Paar GmbH).

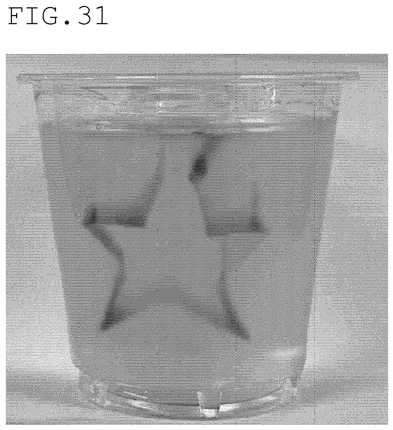

The pattern was drawn while the nozzle of the pattern-forming device was kept at an angle of 30° relative to the front surface. The nozzle moving rate was 20 mm/s and the ink discharge flow rate was 4 μL/s during drawing. As a result, the star pattern shown in FIG. 31 was successfully formed in 90 mL of the drawing target liquid.

FIG. 31 is a photograph of the pattern formed in the liquid using the dispersion of the colorant-encapsulating chitosan particles.

REFERENCE SIGNS LIST

10: pattern-forming material (colorant composition)
11: core-shell particles
12: first liquid
20: second liquid
30: pattern
40: container
100, 200, 300: system for producing pattern-containing liquid
110, 210, 310: tank
120, 220, 320, 420: nozzle
130: pump
140: controller
150, 250: stage
151, 152: liquid delivery tube
260: gantry system
261: x-axial rail
262: z-axial rail
263: z-axial drive motor
264: y-axial rail
265: y-axial drive motor
360: robot arm
460: human collaborative robot
470: syringe extruder
480: syringe

**Claims**

1. A colorant composition comprising a first liquid and core-shell particles,

   the core-shell particles each including a core and a shell that encapsulates the core,
   the core containing an oily component and a colorant,
   the shell containing a cationic polymer,
   the cationic polymer being edible,
   the core-shell particles being dispersed in the first liquid.

2. The colorant composition according to claim 1, wherein the colorant composition is edible.

3. The colorant composition according to claim 1 or 2, wherein the first liquid is a liquid having a density of 0.9 to 1.1 g/cm$^3$.

4. The colorant composition according to claim 1 or 2, wherein the cationic polymer comprises chitosan and/or chitin.

5. The colorant composition according to claim 1 or 2, wherein the cationic polymer is cross-linked with a cross-linker.

6. The colorant composition according to claim 1 or 2, wherein the first liquid is an aqueous solvent.

7. The colorant composition according to claim 1 or 2, wherein the colorant composition has a density of 0.9 to 1.1 g/cm$^3$.

8. The colorant composition according to claim 1 or 2, wherein the oily component is a fat or oil of plant origin.

9. The colorant composition according to claim 1 or 2, wherein the core-shell particles have a mean volume diameter of 0.1 to 100 μm.

10. The colorant composition according to claim 1 or 2, wherein the core-shell particles further comprise an emulsifier.

11. The colorant composition according to claim 10, wherein the emulsifier is a thickening polysaccharide or a nonionic surfactant having an HLB of 15 to 17.

12. The colorant composition according to claim 11, wherein the nonionic surfactant having an HLB of 15 to 17 comprises polyoxyethylene sorbitan monooleate and/or a polyglycerol fatty acid ester.

13. The colorant composition according to claim 11, wherein the thickening polysaccharide is hydroxypropyl methylcellulose.

14. The colorant composition according to claim 1 or 2, wherein the colorant is at least one selected from the group consisting of capsicum oleoresin, gardenia color, monascus color, chlorophyll, β-carotene, astaxanthin, and azo color.

15. The colorant composition according to claim 1 or 2, wherein the colorant composition is for use in an oral composition.

16. The colorant composition according to claim 1 or 2, wherein the core-shell particles are contained in an amount of 0.05 to 50 wt%.

17. The colorant composition according to claim 1 or 2, wherein the colorant composition has a viscosity at 25°C of 0.8 to 100 mPa·s.

18. The colorant composition according to claim 1 or 2, wherein the colorant composition is for use in forming a pattern in a second liquid in a container.

19. A liquid oral composition comprising the colorant composition according to claim 1 and an edible third liquid, the colorant composition being edible.

20. The liquid oral composition according to claim 19, wherein the core-shell particles form a pattern in the third liquid.

21. The liquid oral composition according to claim 19, wherein the third liquid forms a pattern in the colorant composition.

22. The liquid oral composition according to claim 19 or 20, wherein the core-shell particles are contained in an amount of 0.01 to 10 wt%.

23. A method for producing a liquid oral composition, the method comprising the following step (I) or step (II):

(I) adding the colorant composition according to claim 1 to an edible third liquid; or
(II) adding an edible third liquid to the colorant composition according to claim 1,

the colorant composition being edible.

24. The production method according to claim 23, wherein the production method comprises the step (I), and the step (I) includes injecting the colorant composition into the third liquid to form a pattern of the core-shell particles in the third liquid.

25. The production method according to claim 23, wherein the production method comprises the step (II), and the step (II) includes injecting the third liquid into the colorant composition to form a pattern of the third liquid in the colorant composition.

26. A method for forming a pattern in a liquid, the method comprising
injecting the colorant composition according to claim 1 or 2 into a second liquid in a container to form a pattern of the core-shell particles in the second liquid.

27. The method according to claim 26, wherein the colorant composition and the second liquid are edible.

28. A method for forming a pattern in a colorant composition, the method comprising
injecting a second liquid into the colorant composition according to claim 1 or 2 to form a pattern of the second liquid in the colorant composition.

29. The method according to claim 28, wherein the colorant composition and the second liquid are edible.

FIG.1

FIG.2A

FIG.2B

FIG.3

FIG.4

FIG.5

FIG.6

FIG.7

FIG.8

FIG.9

FIG.10

FIG.11

FIG.12

FIG.13A

FIG.13B

FIG.14A

FIG.14B

FIG.15

FIG.16

FIG.17

FIG.18A

FIG.18B

FIG.18C

FIG.18D

FIG.19A

Before filtration · · · · · Flow through · · —
Concentrate

FIG.19B

Before filtration · · · · · Flow through · · —
Concentrate

FIG.19C

Before filtration · · · · · Flow through · · —
Concentrate

FIG.19D

FIG.20

FIG.21

FIG.22A

O/C = 5.6

20 µm

FIG.22B

O/C = 2.2

20 µm

FIG.22C

O/C = 1.1

20 µm

FIG.22D

O/C = 0.6

20 μm

FIG.22E

O/C = 0.1

20 μm

FIG.23

FIG.24

FIG.25A

FIG.25B

FIG.26A

FIG.26B

FIG.27

FIG.28

FIG.29

FIG.30

FIG.31

# INTERNATIONAL SEARCH REPORT

International application No.

**PCT/JP2023/028364**

## A. CLASSIFICATION OF SUBJECT MATTER

*C09B 67/02*(2006.01)i; *A23L 2/52*(2006.01)i; *A23L 2/58*(2006.01)i; *A23L 5/00*(2016.01)i; *A23L 5/41*(2016.01)i;
*A23L 5/43*(2016.01)i; *A23L 5/44*(2016.01)i; *A23L 5/46*(2016.01)i; *A23L 29/275*(2016.01)i; *A61K 9/10*(2006.01)i;
*A61K 9/14*(2006.01)i; *A61K 47/30*(2006.01)i; *A61K 47/36*(2006.01)i; *A61K 47/44*(2017.01)i; *C09B 61/00*(2006.01)i
FI: C09B67/02 Z; A23L2/00 M; A23L2/52; A23L5/00 C; A23L5/41; A23L5/43; A23L5/44; A23L5/46; A23L29/275;
A61K9/10; A61K9/14; A61K47/30; A61K47/36; A61K47/44; C09B61/00 A

According to International Patent Classification (IPC) or to both national classification and IPC

## B. FIELDS SEARCHED

Minimum documentation searched (classification system followed by classification symbols)

C09B67/00; A61K9/00;B01J13/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X | KR 10-2017-0046382 A (SEOUL NATIONAL UNIVERSITY R&DB FOUNDATION) 02 May 2017 (2017-05-02) claims 1-3, 5-7, 9-10, paragraphs [0080]-[0083], [0086]-[0087], [0108]-[0109] | 1-4, 6-8, 14-29 |
| Y | same as above | 5, 9-13 |
| Y | JP 2018-176047 A (PANASONIC IP MAN CORP) 15 November 2018 (2018-11-15) claims 1, 4, paragraphs [0022], [0041] | 5, 9 |
| Y | JP 2002-212211 A (KAO CORP) 31 July 2002 (2002-07-31) claims, paragraphs [0028], [0030], [0033] | 10-13 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 September 2023** | **10 October 2023** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

INTERNATIONAL SEARCH REPORT
Information on patent family members

International application No.

**PCT/JP2023/028364**

| Patent document cited in search report | | | Publication date (day/month/year) | Patent family member(s) | Publication date (day/month/year) |
|---|---|---|---|---|---|
| KR | 10-2017-0046382 | A | 02 May 2017 | (Family: none) | |
| JP | 2018-176047 | A | 15 November 2018 | US 2018/0290119 A1 claims, paragraphs [0033], [0052] EP 3388047 A1 CN 108685713 A | |
| JP | 2002-212211 | A | 31 July 2002 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020247053 A1
- WO 2018218264 A
- JP 7042470 B
- JP 2018176047 A
- JP 2000504033 T

**Non-patent literature cited in the description**

- **G. C. FEYZIOGLU** ; **F. TORNUK**. *LWT-Food Sci. Technol.*, 2016, vol. 70, 104-110
- *CHEMICAL ABSTRACTS*, 64-19-7
- *CHEMICAL ABSTRACTS*, 112-80-1
- *CHEMICAL ABSTRACTS*, 7235-40-7
- *CHEMICAL ABSTRACTS*, 9005-65-6
- *CHEMICAL ABSTRACTS*, 7758-29-4
- *CHEMICAL ABSTRACTS*, 9012-76-4
- *CHEMICAL ABSTRACTS*, 85-86-9
- *CHEMICAL ABSTRACTS*, 463-40-1